(19) Europäisches Patentamt
European Patent Office
Office européen des brevets

(11) **EP 4 082 504 B1**

(12) **EUROPEAN PATENT SPECIFICATION**

(45) Date of publication and mention
of the grant of the patent:
**16.10.2024   Bulletin 2024/42**

(21) Application number: **21382390.9**

(22) Date of filing: **30.04.2021**

(51) International Patent Classification (IPC):
**A61H 1/02** *(2006.01)*      **A61H 3/00** *(2006.01)*

(52) Cooperative Patent Classification (CPC):
**A61H 1/024; A61H 1/0244; A61H 1/0266;**
**A61H 3/00; B25J 9/0006;** A61H 2003/007;
A61H 2201/0107; A61H 2201/1207;
A61H 2201/1628; A61H 2201/1642;
A61H 2201/165; A61H 2201/5007; A61H 2201/501;
A61H 2201/5038; A61H 2201/5061;        (Cont.)

(54) **EXOSKELETON COMPRISING A PLURALITY OF AUTONOMOUSLY OPERABLE MODULES**

EXOSKELETT MIT MEHREREN AUTONOM BETREIBBAREN MODULEN

EXOSQUELETTE COMPRENANT UNE PLURALITÉ DE MODULES À FONCTIONNEMENT AUTONOME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**02.11.2022   Bulletin 2022/44**

(73) Proprietors:
• **Marsi Bionics, S.L.**
  **28521 Madrid (ES)**
• **Consejo Superior de Investigaciones Científicas**
  **(CSIC)**
  **28006 Madrid (ES)**

(72) Inventors:
• **PLAZA FLORES, Alberto**
  **28521 Madrid (ES)**

• **HERNANDEZ MELERO, Mar**
  **28521 MADRID (ES)**
• **PRIETO PÉREZ-BORROTO, Manuel**
  **28521 MADRID (ES)**
• **GARCIA ARMADA, Elena**
  **28521 MADRID (ES)**

(74) Representative: **Del Valle Valiente, Sonia**
  **C/ Miguel Angel Cantero Oliva, 5,53**
  **28660 Boadilla del Monte-Madrid (ES)**

(56) References cited:
CN-A- 105 287 164      US-A1- 2010 094 188
US-A1- 2013 261 766    US-A1- 2014 142 475

(52) Cooperative Patent Classification (CPC): (Cont.)
     A61H 2201/5069; A61H 2201/5071;
     A61H 2201/5084; A61H 2201/5097

**Description**

**TECHNICAL FIELD**

The present invention belongs to the field of exoskeletons used for the rehabilitation of the biological joints of a patient.

A first object of the present invention is an exoskeleton formed by a plurality of autonomously operable modules where each of the modules can operate either alone or in combination with one or more of the remaining modules. The exoskeleton therefore adapts to the needs of the patient with respect to the number and position of the biological joints being assisted.

A second object of the present invention is a non-therapeutical method for operating an exoskeleton like the one disclosed above.

**STATE OF THE ART**

Rehabilitation and muscle training therapies have turned out to be very beneficial in lower limb mobility recovery in patients that suffer from neurological, traumatic, or neuromuscular diseases, such as complete and incomplete Spinal Cord Injury (SCI), stroke, multiple sclerosis, cerebral palsy, and other neurological diseases. As part of those therapies, a series of active mobility assistance devices have been developed with the purpose of reducing the physiotherapists' repetitive workload. In particular, exoskeletons proved to be especially effective for allowing several joints to move simultaneously and for training/aiding the patient in the gait recovery process.

Exoskeletons are robotic devices used for the rehabilitation of patients affected by pathologies that influence the mobility of the lower-limbs. Exoskeletons are worn by the patient and, by means of powered mechanical joints suitably controlled by means of a controller receiving information from a set of sensors, aid the patient in moving the biological joints corresponding to the relevant mechanical joints.

According to the number of joints, medical lower-limb exoskeletons can be classified into two categories: full exoskeletons and partial exoskeletons. Full exoskeletons are designed to provide support at least to the hips and knees of both limbs by means of corresponding powered mechanical joints. Document EP3225363B1, developed by some of the inventors of the present application, discloses a full exoskeleton. Partial exoskeletons only provide assistance to one or two joints of one or both lower limbs, but they do not assist both joints of both lower limbs. For example, a partial exoskeleton may provide support for the hip and knee corresponding to a single lower limb, or else only to the hip or to the knee of said lower limb. Partial exoskeletons are useful for the rehabilitation of patients having only a single affected leg to regain their walking ability. Document EP2178680B1 discloses a partial exoskeleton.

However, the progressive and degenerative characteristics of some disorders, mainly neurological disorders, makes each patient unique in terms of assistance needs in the joints affected as part of the disease progression. Merely as an example, a patient affected by complete hemiplegia may have almost no mobility in the lower limbs a couple of days after suffering from a stroke, but may experience mobility recovery in the hip the first weeks, and may even recover the mobility of the knee and ankle some months thereafter. This patient would require complete assistance for both lower limbs during the first days of the recovery process. However, as some of the joints progressively recover mobility, the patient would soon only require assistance in certain specific, not yet recovered joints.

Currently, there is no single exoskeleton suitable for assisting this kind of patients. Indeed, the architecture of known full exoskeletons is based on a unique central controller, usually located in a torso component of the exoskeleton. All the joints and sensors of the exoskeleton are connected to the central controller, which then calculates and commands the trajectories for each of those joints. In other words, while joints can be mechanically or electrically disconnected from the rest of joints, the central controller at the torso component cannot be dispensed with.

In this respect, note that while some prior art exoskeletons are disclosed as *"modular"*, they merely refer to the possibility of disassembling the components making up the exoskeleton in order to don/off the exoskeleton in a more convenient way.

Document US20130261766 discloses a powered prosthetic thigh having a proximal portion configured to couple to a prosthetic hip socket and a distal portion attached to the proximal portion.

Document US20100094188 discloses an exoskeleton bracing system includes: a trunk support for affixing to the trunk of a disabled person and leg braces for connecting to the legs of the person, each leg brace including limb segment braces.

Document US2014142475 discloses an exoskeleton comprising a plurality of modules each configured for assisting a corresponding biological joint of a patient wearing the exoskeleton, wherein each module comprises a mechanical structure comprising one actuated joint, mechanical structure further comprising fastening means for fastening the module to portions of a limb located at either side of said corresponding biological joint, mechanical structure further comprising releasable mechanical coupling means for releasably coupling each module to at least one adjacent module, each module further comprises a plurality of sensors configured to determine the kinematic condition of the corresponding biological joint, and each module further comprises a dedicated controller connected to the actuated joint of said module.

## DESCRIPTION OF THE INVENTION

The present invention provides an exoskeleton according to claim 1 and a non-therapeutical method for operating an exoskeleton according to claim 10.

The present invention solves the aforementioned drawbacks by means of a new modular exoskeleton formed by modules configured to operate either autonomously or in cooperation with other modules of the exoskeleton, not necessarily in a full exoskeleton configuration but also admitting a plurality of different partial exoskeleton configurations. Thereto, the exoskeleton of the invention has a distributed architecture not based on a unique central controller calculating the trajectories of each joint. Indeed, unlike known exoskeletons, each module of the present exoskeleton comprises a dedicated controller for the corresponding actuated joint, and each of these dedicated controllers is configured for calculating and commanding the trajectories of the corresponding actuated joint whether as an autonomous, i.e. standalone module, or combined with other modules of the exoskeleton.

An advantage of this configuration is that the exoskeleton can operate normally even when one or more of the modules is not present, i.e. when one or more of the modules is not worn by the patient. That is, the user can select which of the modules he/she needs to wear depending on the particular condition of his/her biological joints, and the modules of the exoskeleton are configured for suitably coordinating ones with the others, e.g. to render a natural gait when used in biological joints of the lower limbs of the patient. The exoskeleton can therefore adopt a plurality of configurations, each comprising a particular subset of the modules, for adapting to the particular needs of each patient. For example, a patient affected by a stroke can use the full exoskeleton (i.e. having each and every module, namely two hip modules and two knee modules, and additionally a lumbar support) during the first weeks. Then, the patient can remove the hip modules and the lumbar support once the mobility of the hips is recovered, and continue using the exoskeleton in a partial configuration formed just by the two knee modules.

A further advantage of the present modular configuration is that, unlike in conventional exoskeletons having a unique central controller where control algorithms are executed sequentially, in the present invention control algorithms needed for controlling the exoskeleton are executed in parallel. This unique feature allows the exoskeleton of the present invention to execute the same algorithms faster, or else to execute more complex algorithms in the same amount of time. Consequently, the control capability of the present exoskeleton is increased.

A number of terms used in the present description are now disclosed in the following paragraphs:

The term *"biological joint"* refers to a joint of the patient, i.e. the knee joint, the hip joint, the ankle joint, or the elbow joint. Biological joints are naturally not part of the invention, but they are nevertheless mentioned to better disclose the position of certain parts of the exoskeleton when in use, i.e. when worn by the patient.

The term *"actuated joint"* refers to a joint of the exoskeleton of the present invention. The particular structure of the joints is not disclosed in detail in the present application, but generally speaking each joint comprises an actuator mechanically coupled to a pair of rotatably coupled segments such that assistance is provided to the corresponding biological joint of the patient. Providing assistance, i.e. actuating, does not only include powering the biological joints of the patient, but may also include blocking, braking or somehow modifying the behaviour of the biological joints of the patient. In the particular case of a joint powered by a motor, a transmission and gearbox system may adapt the torque and speed values provided by the motor. Additionally, in that case an elastic element may be provided between the motor and the segments for ensuring a smooth transmission of the torque output of the motor.

The term *"adjacent"* generally refers to modules which, when worn by the patient, are situated in immediately neighbouring positions. Adjacent modules are those configured to assist adjoining biological joints of the same limb, e.g. when worn by the patient, the right knee module is adjacent the right hip module and the right ankle module, or the elbow module is adjacent the wrist module and the shoulder module. Additionally, when worn by the user, the right and left hip modules, and also the right and left shoulder modules, are adjacent each other.

The term *"opposite"* generally refers to modules which, when worn by the patient, are situated next to the same type of biological joint but in different limbs. For example, when worn by the patient, the right knee module is opposite the left knee module, the right hip module is opposite the left hip module, the right elbow module is opposite the left elbow module, and so on.

The term *"gait"* is a person's pattern of walking. Walking involves balance and coordination of muscles so that the body is propelled forward in a rhythm, called the stride. There are numerous possibilities that may cause an abnormal gait. Some common causes are a degenerative disease (such as arthritis), an inner ear disorder, stroke, foot conditions, a neurological condition, etc. A normal gait requires coordination between biological joints of opposite upper and lower limbs, and also between the biological joints in each upper and lower limb.

The term *"trajectory"* when used in connection to a joint, e.g. *"joint trajectory"*, refers to the relationship between the position of the actuated joint (defined, e.g. by an angle) and time. The desired trajectory of a particular actuated joint can be calculated based on the kinematic condition of the relevant joint as well as on the kinematic condition of other joints of the exoskeleton. Thereby, a suitable coordination between joints for ensuring a natural gait can be achieved.

The term *"GRF sensor"* refers to a sensor for measuring the ground reaction force (GRF) applied to a structure of the exoskeleton under the foot of the patient. The GRF is the force exerted by the ground on a body in contact with it. For example, a person standing motionless on the ground exerts a contact force on it (equal to the person's weight) and at the same time an equal and opposite ground reaction force is exerted by the ground on the person. In this example, the ground reaction force coincides with the notion of a normal force. However, in a more general case, the GRF will also have a component parallel to the ground, for example when the person is walking - a motion that requires the exchange of horizontal (frictional) forces with the ground.

The term *"control algorithm"* refers to one or more methods for determining the desired trajectory of each joint from the sensor information characterizing the kinematic condition of the joints.

The term *"CPG"* or *"Central Pattern Generator"* refers to a control strategy that uses a network of one or more oscillators to create rhythmic signals, without the need of sensory feedback, and capable of relating with other CPGs to produce a coordinated process, in this context, the signal generated by each CPG is the joint trajectory to coordinate the locomotion process. A Central Pattern Generator is disclosed by Jiaxing Fang et al, "A robotic exoskeleton for lower limb rehabilitation controlled by a central pattern generator", 2014 IEEE International Conference on Robotics and Biomimetics (ROBIO 2014), 5-10 December 2014, DOI: 10.1109/ROBIO.2014.7090432.

The term *"Assist as Needed Algorithm"* refers to a control strategy where assistive torques are turned off during periods when the patient is able to execute a desired gait pattern but, if the patients gait deviates sufficiently from a desired trajectory, then assistive torques are generated to compensate for the patient's loss of strength. This strategy encourages the patient to contribute effort while still enabling the exoskeleton to guide movements. An Assist as Needed Algorithm is disclosed by Samuel M. Campbell et al, "Autonomous assistance-as-needed control of a lower limb exoskeleton with guaranteed stability", IEEE Access (Volume: 8), pages 51168-51178, February 12th, 2020, DOI: 10.1109/ACCESS.2020.2973373.

Terms such as *"down"*, *"up"*, *"below"*, *"above"*, *"downwards"*, *"upwards"*, as well as similar relative terms must be interpreted in connection with the natural orientation of the exoskeleton while in use, i.e. while worn by a patient that is standing on his/her feet.

**First aspect: exoskeleton**

A first aspect of the invention is directed to an exoskeleton for assisting human movement comprising a plurality of autonomously operable modules, each configured for assisting a corresponding biological joint of a patient wearing the exoskeleton. Note that the concept underlying the invention is applicable generally speaking to any cinematic chain of the patient, including those present in lower limbs and in upper limbs.

The structure of each module is particularly configured to adapt to the features of the biological joint it is designed to assist. In particular, each module comprises a mechanical structure comprising one actuated joint, where the structure comprises fastening means for fastening the module to said corresponding biological joint. The fastening means could be of any type provided the structure of the module can be suitably attached to the portions of the corresponding limb located at either side of the biological joint. For example, the fastening means could comprise bands configured to surround the relevant portion of the limb. These bands could be provided with complementary loop and hook surfaces such as, e.g. Velcro® for firmly attaching one to the other around the portion of the limb of the patient.

Each module also comprises at least one releasable mechanical coupling means for releasably coupling each module to at least one adjacent module. The releasable coupling means can be of any type provided a fast and suitable connection between adjacent modules is carried out.

Each module further comprises a plurality of sensors configured to determine the kinematic condition of the corresponding biological joint said module is configured to be fastened to. The sensors can be attached or embedded in any suitable position in the structure of the module for measuring, e.g. angle, speed, force, torque, and generally speaking any variable needed for calculating the trajectory of a joint of the exoskeleton for suitably assisting the movement of the relevant biological joint according to a natural gait. In this respect, note that some sensors may be configured to be connected a different module depending on which modules are present in the particular configuration of the exoskeleton.

Now, the above features are generally known in the field. However, the main differentiating feature of the present invention is that each module further comprises a dedicated controller connected to the actuated joint of said module. The exoskeleton further comprises multimaster electrical communication means between the dedicated controllers of the modules for sharing the kinematic condition of the biological joints each module is fastened to. In this context, the term *"multimaster"* refers to the fact that the modules are not connected according to a master-slave controller architecture. That is, there is no master having control over a number of slaves. On the contrary, the communication takes place between controllers having the same hierarchy level. The multimaster electrical communication means thus merely receives the data sent by each controller such that said data are then available for each of the controllers connected to the communication means.

Therefore, the dedicated controller of each module is configured for collecting information from the sensors belonging to said module, sharing said information with the remaining modules through the electrical communication means, determining which other modules of the exoskeleton the patient is wearing based on the information available through the multimaster electrical communication means, and autonomously calculating and commanding, based on the information about the kinematic condition of the biological joints of the patient shared through the multimaster electrical communication means, a desired trajectory of the actuated joint of said module for assisting the movement of the corresponding biological joint in coordination with the kinematic condition of other biological joints. Therefore, the modular exoskeleton operates according to a multi-master decentralized control strategy which does not require the patient to wear all the modules.

In principle, an exoskeleton having the above general configuration can be used for assisting the movement of any number of biological joints of the patient irrespective of whether the joints belong to the lower limbs or to the upper limbs of the patient. Examples of the biological joints assisted by the exoskeleton of the invention when applied to the lower limbs of a patient are, without limitation: hip joint (flexion/extension, abduction/adduction, rotation, etc.), knee joint (flexion/extension, etc.), ankle joint (sagittal, lateral, etc). Examples of the biological joints assisted by the exoskeleton of the invention when applied to the upper limbs of a patient are, without limitation: shoulder joint (flexion/extension, abduction/adduction, rotation, etc.), elbow joint (flexion/extension, etc.), wrist joint (flexion/extension, abduction/adduction, rotation, etc.). Other biological joints not necessarily belonging to the limbs of the patient can also be assisted with the exoskeleton of the present invention.

The concept underlying the invention is that the exoskeleton comprises modules for assisting particular biological joints, where each of the modules comprises a dedicated controller instead of using a central controller connected to each and every one of the modules (as in a centralized control architecture). Each dedicated controller receives information from a plurality of sensors directly connected thereto, and the plurality of dedicated controllers are configured to share therebetween the information provided by those sensors. Using said information about the kinematic condition of the biological joints of the patient, each dedicated controller can first calculate a suitable trajectory for the corresponding actuated joint that ensures a natural gait, and then each dedicated controller can command the relevant actuator for ensuring that said actuated joint follows said trajectory.

A first advantage of using said distributed control strategy is that no central controller is needed, and therefore only the modules required by the patient need be worn by the patient. The modular exoskeleton of the present invention can therefore be adapted to the needs of the patient in the sense that the exoskeleton need not be in the full configuration to work, but several partial configurations are possible.

A second advantage of using the above disclosed distributed control strategy is that the conventional central controller requiring a high computing power can be replaced by a number of joint dedicated controllers having a lower computing power. And even so, the execution of the control algorithms is carried out faster in the present exoskeleton because the joint dedicated controllers operate in parallel, while the prior art central controller executed the control algorithms sequentially. More accurate and complex control algorithms can therefore be used in the present exoskeleton.

A preferred embodiment of the invention is directed to a modular exoskeleton where the modules are configured for assisting the lower limbs of the patient. More preferably, such exoskeleton preferably comprises the following modules: right knee module, left knee module, right hip module, left hip module, and further a lumbar support configured to be coupled to the right hip module and/or the left hip module.

Even more preferably, in such an exoskeleton the controller of each module calculates and commands the desired trajectory of the actuated joint of said module based on the kinematic condition of adjacent biological joints and on the kinematic condition of the opposite biological joint. That is, the calculation of the trajectory of e.g. the left hip module is based on the kinematic condition of the left knee joint and of the right hip joint. In that case, the exoskeleton is operable in the following configurations:

- Full exoskeleton comprising the right knee module, the left knee module, the right hip module and the left hip module.
- Exoskeleton consisting of the right knee module, the left knee module, the right hip module or the left hip module alone.
- Exoskeleton consisting of the right hip module and the right knee module, and thus lacking the left hip module and the left knee module.
- Exoskeleton consisting of the left hip module and the left knee module, and thus lacking the right hip module and the right knee module.
- Exoskeleton consisting of the right hip module and the left hip module, and thus lacking the right knee module and the left knee module.
- Exoskeleton consisting of the right knee module and the left knee module, and thus lacking the right hip module and the left hip module.

In a particularly preferred embodiment of the invention, the multimaster electrical connection means between the controllers of the modules comprise wired multimaster connection means, such as e.g. a multimaster communication bus. In a more preferred embodiment of the invention, when the exoskeleton is directed to assist the lower limbs of the patient, said wired multimaster electrical connection means between the controllers of the modules is configured to run from the controller of the module closest to the right foot of the patient, upwards along said right lower limb for connection with all right limb controllers, crosswise along the lumbar region of the patient, and then downwards along the lower limb for connection with all left limb controllers down to the controller of the module closest to the left foot of the patient.

According to an alternative preferred embodiment, the multimaster electrical connection means comprise wireless connection means, such as e.g. Bluetooth® or WiFi. The selection between wired and wireless communication depends on each application. Furthermore, the connections between modules may be carried out using a combination of wired and wireless connection means.

The controllers disclosed above may comprise any type of processing device having a suitable number of I/O ports for the electrical connections disclosed in the present document and also having enough processing power for carrying out the necessary calculations for obtaining the trajectory of the relevant joint. The controller may comprise, e.g. a microprocessor, a microcontroller, a DSP, a FPGA, or the like. The controllers may further comprise any additional means needed for the operation of the exoskeleton, such as memory means, communication means, battery means, or the like. In a particularly preferred embodiment of the invention, each dedicated controller comprises a dedicated memory means for storing a global database containing information determining the kinematic condition of the biological joints each module is configured to be fastened to.

In still another preferred embodiment of the invention, an actuator of the actuated joint of each module further comprises current, voltage and temperature sensors in communication with the dedicated controller of said module. The dedicated controller is then further configured to detect actuator malfunctions by comparing current, voltage and temperature values obtained by the above sensors with known predetermined values, and for commanding a fail-safe routine for all modules through the multimaster electrical communication means when a malfunction is detected.

In further preferred embodiments of the invention, the sensors of the modules comprise inertial motion units, angular position sensors, force sensors and/or ground reaction force sensors. These sensors can be provided in any position of the structure of the relevant module. The number and position of the sensors of each module is selected according to known considerations such that the information obtained is enough to sufficiently characterize the kinematic condition of the relevant biological joint of the patient. Furthermore, the communication between the sensors and the relevant controller can be wired or wireless depending on the application.

In this respect, note that the exoskeleton can further comprise additional sensors not physically bound to the relevant module, but configured to be attached directly to the clothes of the patient or the like. For example, hip modules usually require shoulder orientation sensors. Naturally, these sensors are not rigidly fastened or physically comprised in the hip modules, but they are physically attached to the shoulder of the patient and then electrically connected to the relevant hip module. Further, when considering a single limb exoskeleton configuration, e.g. consisting only of the right hip and right knee modules, the ground reaction force exerted on the left foot is necessary. Therefore, a GRF sensor is provided under the foot of the patient, i.e. on the sole of the shoe or the like, and said GRF sensor is then electrically connected to the relevant module. As disclosed above with respect to the connections between modules, the electrical connection between the sensors and the controllers of the relevant modules may be wired or wireless depending on the circumstances. Furthermore, some sensors like e.g. shoulder orientation sensors and GRF sensors, may be connected to different modules depending on which modules are present in the particular configuration of the exoskeleton. For example, while right shoulder orientation sensor, in principle, would belong to the right hip module, in exoskeleton configurations not having a right hip module the right shoulder orientation sensor could be connected to the left hip module. Similarly, while the left GRF sensor, in principle, would belong to the left knee module, in exoskeleton configurations not having a left knee module the left GRF sensor could be connected to the right knee module.

In still one more preferred embodiment of the invention, the releasable mechanically coupling means between adjacent modules comprise a slider tube in one module suitable to be received by a complementary slider cavity in an adjacent module. Said releasable mechanically coupling means are further adjustable as to the distance between said adjacent modules. The patient can therefore adjust the dimensions of the exoskeleton to his/her needs as to size.

Furthermore, it is understood that the actuators employed for actuating the joints of the present invention are fed by means of one or more electrical batteries. Thereto, each module may comprise a dedicated battery, e.g. a battery inserted in a socket or pocket of the module, whereby empty batteries can be fast and conveniently replaced. Alternatively, the patient may wear a single battery, e.g. as a backpack, connected to the modules by means of wired electrical connections, all the modules then sharing a single battery.

**Second aspect:** a non-therapeutical **method for operating the exoskeleton**

A second aspect of the present invention is directed to a non-therapeutical method for operating ar exoskeleton comprising a plurality of autonomously operable modules such as the one disclosed above.

The modular exoskeleton comprises a plurality of modules each configured for assisting a corresponding biological joint of a patient wearing the exoskeleton. Each module comprises a mechanical structure comprising one actuated joint, and the mechanical structure further comprises fastening means for fastening the module to the corresponding biological joint. The mechanical structure further comprises releasable mechanical coupling means for releasably coupling each module to at least one adjacent module. Each module further comprises a plurality of sensors configured to determine the kinematic condition of the corresponding biological joint said module is configured to be fastened to. Each module further comprises a dedicated controller connected to the actuated joint of said module. Preferably, each controller comprises dedicated memory means.

In a particularly preferred embodiment of the invention, the modules are configured to assist biological joints of a lower limb of the patient wearing the exoskeleton. More preferably, the modular exoskeleton particularly comprises the following modules: right knee module, left knee module, right hip module, left hip module, and further a lumbar support configured to be coupled to the right hip module and/or the left hip module. With this configuration, the exoskeleton can operate according to the configurations disclosed in detail above in the present document.

The exoskeleton further comprises multimaster electrical communication means between the dedicated controllers of the modules for sharing the kinematic condition of the biological joints each module is fastened to. The multimaster electrical communication means may be wired or wireless. In a particularly preferred embodiment where the exoskeleton is configured for assisting the lower limbs of the patient, the multimaster electrical communication means is configured to run from the controller of the module closest to the right foot of the patient, upwards along said right lower limb for connection with all right limb controllers, crosswise along the lumbar region of the patient, and then downwards along the lower limb for connection with all left limb controllers down to the controller of the module closest to the left foot of the patient.

Now, irrespective of whether the exoskeleton is directed to the lower limbs or to the upper limbs of the patient, the present method is characterized in that the modular exoskeleton operates according to a multi-master decentralized control strategy which does not require the patient to wear all the modules. On the contrary, the exoskeleton can include only a subset of the modules and still operate suitably. Thereto, each dedicated controller carries out the following steps:

- Collecting information determining the kinematic condition of the corresponding biological joint said module is configured to be fastened to from the sensors of the module comprising said dedicated controller.
  As disclosed above in the present document, each module comprises a plurality of sensors configured for detecting the kinematic condition of the biological joint the relevant module is fastened to. These sensors can be wired or wirelessly connected to the controller of said module. These sensors need not be physically attached to the module, but may otherwise be fastened to the patient, e.g. to the clothes of the patient. Therefore, in this step of the method, the controller of each module collects the parameter values detected by these sensors, e.g. force, orientation, velocity, acceleration, etc. The collection of the parameter values detected by the sensors is carried out periodically according to a predetermined frequency.

- Sharing said information with the controllers of the remaining modules through the multimaster electrical communication means.
  The relevant module periodically sends the data detected by the sensors through the multimaster electrical communication means. The data are then available for each of the remaining modules connected to the communication means.

- Determining which other modules of the exoskeleton the patient is wearing based on the information available through the multimaster electrical communication means.

  Each module periodically accesses the multimaster electrical communication means to gather the relevant sensor information and to thereby determine the kinematic condition of those biological joints that are relevant for the calculation of the trajectory of the actuated joint of said module.

In addition to collecting the sensor information, in an initial step of the present method each module determines which other modules of the exoskeleton the patient is wearing. Thereto, the sensor information provided to the multimaster electrical communication means by each module may comprise a module identifier. Alternatively, a dedicated identifier may be sent by each module through the multimaster electrical communication means. In any case, the information present in the communication means allows each module to determine which modules are connected. The particular configuration of the exoskeleton is thus known to each of the modules, as this information is relevant for the calculation of the trajectory.

- Autonomously calculating and commanding a desired trajectory of the actuated joint of said module for assisting the movement of the corresponding biological joint in coordination with the kinematic condition of other biological joints.

The calculation of the trajectory can be carried out by means of any known strategy known in the art. However, in a particularly preferred embodiment of the invention, the step of calculating the desired trajectory of the actuated joint of a module is carried out using a neural network of Central Pattern Generator algorithms comprising adaptive Hopf oscillators. Naturally, as disclosed above, each Central Pattern Generator belongs to each of the modules controlling the relevant actuated joint. Usually, each Central Pattern Generator algorithm is previously trained with a desired trajectory of the corresponding biological joint by means of a Dynamic Hebbian learning method applied to adaptive Hopf oscillators. Furthermore, said neural network of Central Pattern Generator algorithms preferably comprises coordination terms for ensuring coordination between actuated joints of a limb and coordination between actuated joints of opposite limbs.

This particular strategy is chosen due to its capacity of coordination with other modules on the loop, being optimate for the distribution of the computational load. The details of this strategy is disclosed further down in the present document in connection with the description of an exemplary embodiment.

In a particularly preferred embodiment of the invention, the method further comprises the steps of:

- Storing the information determining the kinematic condition of the corresponding biological joint each module is configured to be fastened to in a respective global database comprised in the dedicated memory means of each controller.

- Each controller updating said global database by accessing periodically to the electrical communication means.

In still one more preferred embodiment of the invention, an actuator of the actuated joint of each module further comprises current, voltage and temperature sensors in communication with the dedicated controller of said module. The dedicated controller is then further configured to detect actuator malfunctions by comparing current, voltage and temperature values obtained by the above sensors with known predetermined values, and for commanding a fail-safe routine for all modules through the multimaster communication means.

**BRIEF DESCRIPTION OF THE DRAWINGS**

Fig. 1 shows a perspective view of an exemplary modular exoskeleton according to the present invention comprising a right hip module, a left hip module, a right knee module and a left knee module in a full configuration.

Figs. 2a-2e show perspective views of the exemplary modular exoskeleton in five partial configurations each consisting of a particular subset of the modules.

Fig. 3 shows a typical centralized control architecture employed in exoskeletons known from the prior art.

Fig. 4 shows the distributed control architecture of the exemplary modular exoskeleton according to the present invention.

Fig. 5 shows in further detail the architecture of the electrical connections between the modules of the exemplary exoskeleton according to the present invention.

Fig. 6 shows schematically the structure of a database used in the exemplary modular exoskeleton according to the present invention.

Figs. 7a-7b schematically show what information the exemplary modular exoskeleton in the full configuration collects from the global database.

Figs. 8a-8b schematically show what information the exemplary modular exoskeleton in a partial configuration including only the two hip modules collects from the global database.

Figs. 9a-9b schematically show what information the exemplary modular exoskeleton in a partial configuration including only the right hip and right knee modules collects from the global database.

Figs. 10a-10b schematically show what information the exemplary modular exoskeleton in a partial configuration including only the two knee modules collects from the global database.

Figs. 11a-11b schematically show what information the exemplary modular exoskeleton in a partial configuration including only the left hip module collects from the global database.

Figs. 12a-12b schematically show what information the exemplary modular exoskeleton in a partial configuration including only the right knee module collects from the global database.

Fig. 13 is a diagram showing the most relevant steps of the operation method of the exoskeleton of the invention.

Fig. 14 is a schematic drawing showing the main components of a module of the exemplary modular exoskeleton.

Fig. 15 shows, in connection with the learning process of hip angular position, the gait signal to learn (dashed line) and the result of learning (solid line) at the beginning in the upper graph and at the end in the lower graph.

Fig. 16 shows, in connection with the learning process of knee angular position, the gait signal to learn (dashed line) and the result of learning (solid line) at the beginning in the upper graph and at the end in the lower graph.

Fig. 17 shows the angular trajectories generated by each of the four joint modules CPGs - right hip, right knee, left hip and left knee - in synchronism.

Fig. 18 shows the angular trajectories of four joint modules - right hip, right knee, left hip and left knee - in synchronism while changing the frequencies $\omega_{swing}$ and $\omega_{stance}$.

## DESCRIPTION OF WAYS OF CARRYING OUT THE INVENTION

### Description of the exoskeleton

In the present example, an exemplary exoskeleton (1) directed to assist the lower limbs of a patient is disclosed. In particular, the exoskeleton (1) is directed to assist the flexion/extension of the biological hip joints and the flexion/extension of the biological knee joints. Note, however, that there is no limitation as to the number and position of the biological joints an exoskeleton according to the present invention can assist. For example, in connection with a lower limb exoskeleton, the ankle joint may also be assisted. Furthermore, several different type of movements may be assisted in each of the joints, including flexion/extension, abduction/adduction, rotation, etc. The set of joints assisted by the exoskeleton (1) shown in the figures is merely exemplary and by no means must be considered limiting. The concept underlying the present invention is applicable irrespective of the joints the relevant exosleketon is configured to assist.

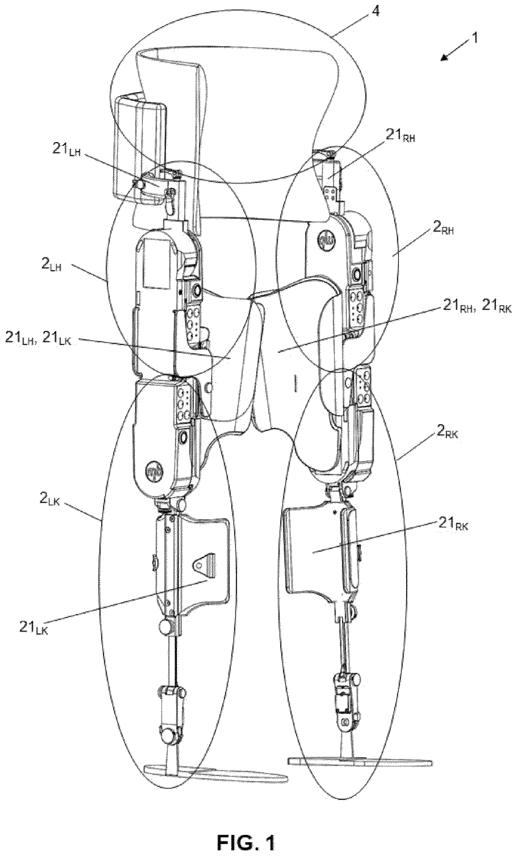

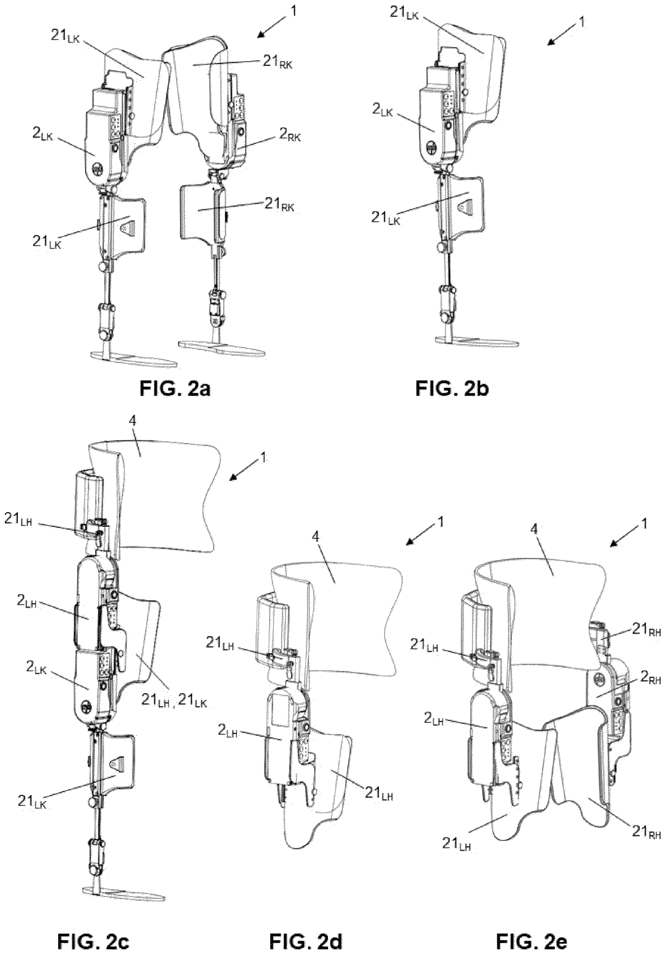

Fig. 1 shows a perspective view of the exemplary exoskeleton (1) in a full configuration. Figs. 2a-2e show respective perspective views of the exemplary exoskeleton (1) according to partial configurations, in particular a configuration consisting of the right and left knee modules (Fig. 2a), a configuration consisting of the left knee module alone (Fig. 2b), a configuration consisting of the left knee and hip modules (Fig. 2c), a configuration consisting of the left hip module alone (Fig. 2d), and a configuration consisting of the right and left hip modules (Fig. 2e).

In the present example, the actuated joints are particularly powered joints. The powered joints therefore comprise a motor connected to the joint by means of a gear mechanism for adapting the velocity of the motor to the desired velocity of the joint. The powered joints may also comprise an elastic element configured for ensuring a smooth transmission of power from the motor to the joint.

The exemplary exoskeleton (1) comprises four modules: a right knee module ($2_{RK}$), a left knee module ($2_{LK}$), a right hip module ($2_{RH}$), and a left hip module ($2_{LH}$). The exemplary exoskeleton (1) further comprises a lumbar support (4). These components are now disclosed in more detail.

a) Right knee module ($2_{RK}$)

The right knee module ($2_{RK}$) comprises a right thigh segment and a right calf segment connected by a right knee powered joint. The right calf segment is a vertical rod protruding downwardly from a cover housing the powered joint, as well as relevant electrical components of the right knee module ($2_{RK}$). The cover itself makes up the right thigh segment in this embodiment. Naturally, the right thigh segment comprises fastening means ($21_{RK}$) configured to be fastened to the right thigh of the patient, while the right calf segment comprises fastening means ($21_{RK}$) configured to be fastened to the right calf of the patient. The fastening means could be just bands provided with complementary loop and hook surfaces such as, e.g. Velcro®. Alternatively, or additionally, the fastening means could comprise an essentially semicylindrical shell designed for receiving the thigh or calf. In any case, when the right knee module ($2_{RK}$) is worn by the user with the segments respectively fastened to the thigh and calf, the right knee joint of the module is immediately adjacent side-by-side the right knee biological joint of the patient.

The right knee module ($2_{RK}$) further comprises coupling means for mechanical coupling to the right hip module ($2_{RH}$) when both modules are used at the same time (see Fig. 2b where the exoskeleton (1) is formed by one hip module ($2_{LH}$) and one knee module ($2_{LK}$) of the same leg). Indeed, in this exemplary embodiment, the only adjacent module to the right knee module ($2_{RK}$) is the right hip module ($2_{RH}$). Therefore, in case the patient wears both the right knee module ($2_{RK}$) and the right hip module ($2_{RH}$) at the same time, these two modules must be mechanically coupled. The coupling means of the right knee module ($2_{RK}$) comprises a pair of grooves provided on lateral sides of the cover. As shown in Fig. 2a, the cover has a substantially parallelepipedic configuration having parallel opposing lateral sides where the grooves are provided. As mentioned above, fastening means ($21_{RK}$, $21_{RH}$) are provided for attaching the exoskeleton to the right thigh of the patient. These fastening means ($21_{RK}$, $21_{RH}$) are shared by the right knee module ($2_{RK}$) and the right hip module ($2_{RH}$). A pair of rails are provided on an external surface of said fastening means ($21_{RK}$, $21_{RH}$) i.e. a surface that, when worn by the patient, is oriented outwardly with respect to the leg of the patient. The pair of rails are intended to match the aforementioned grooves provided on the lateral sides of the cover of the right knee module ($2_{RK}$). Thus, the cover of the right knee module ($2_{RK}$) can be suitably coupled to the fastening means ($21_{RK}$, $21_{RH}$) by displacing the cover from below such that the grooves advance upwardly along the rails. Similarly, a corresponding cover comprising the electrical components of the right hip module ($2_{RH}$) can be connected to an opposite end of the rails provided on the external surface of the fastening means ($21_{RK}$, $21_{RH}$) by advancing said cover downwardly along the rails. Furthermore, the covers of the right knee module ($2_{RK}$) and the right hip module ($2_{RH}$) have complementary shapes such that, when both are coupled to the fastening means ($21_{RK}$, $21_{RH}$), their shapes match. The two modules ($2_{RK}$, $2_{RH}$) thus coupled then mechanically behave as a single lower limb unit sharing the thigh fastening means ($21_{RK}$, $21_{RH}$).

The right knee module ($2_{RK}$) further comprises sensors for determining the kinematic condition of the right knee biological joint. Preferably, these sensors comprise inertial motion units, angular position sensors, and force sensors. These sensors can be provided in any position of the structure of the right knee module ($2_{RK}$). In particular, the right knee module preferably further comprises a GRF sensor placed at a platform provided at the lower end of the right calf segment for supporting the foot of the patient. In any case, the number and position of the sensors of the right knee module ($2_{RK}$) is selected according to known considerations such that the information obtained is enough to sufficiently characterized the kinematic condition of the right knee biological joint of the patient. Furthermore, the communication between the sensors and the relevant controller ($23_{RK}$) can be wired or wireless depending on the application.

Now, unlike in prior art exoskeletons, the right knee module ($2_{RK}$) of the present exoskeleton further comprises a right knee controller ($23_{RK}$) configured to autonomously calculate and command a desired trajectory for the right knee powered joint. Indeed, since the right knee module ($2_{RK}$) is configured to be in electrical communication with other modules, i.e. the right hip module ($2_{RH}$), the left hip module ($2_{LH}$) and/or the left knee module ($2_{LK}$), if worn by the patient, the right knee module ($2_{RK}$) is provided with all the information regarding the kinematic condition of those joints that need to be taken into account for rendering a natural gait when the patient walks aided by the exoskeleton (1).

b) Right hip module ($2_{RH}$)

The right hip module ($2_{RH}$) comprises a lumbar segment and a right thigh segment connected by a right hip actuated joint. The right thigh segment comprises fastening means ($21_{RH}$) of the same type disclosed above, i.e. bands provided with hook and loop surfaces for firmly fastening to the thigh of the patient, and/or shells for receiving the thigh. The lumbar segment is configured to be coupled to the lumbar support (4) which, when worn, abuts against a lumbar area of the patient. The lumbar segment is configured to be coupled to the lumbar support (4) by means of a lumbar support coupling means comprising an adjustable regulation system allowing for the distance between hip module ($2_{RH}$) and lumbar support (4) to be modified according to the needs of the patient. In any case, when the right hip module ($2_{RH}$) is worn by the user with the segments respectively fastened to the thigh and lumbar support, the right hip actuated joint of the module is immediately adjacent side-by-side the right hip biological joint of the patient.

The right hip module ($2_{RH}$) further comprises coupling means for coupling the right hip module with the right knee module, if worn by the user. These coupling means were disclosed in previous paragraphs. The right hip module ($2_{RH}$) further comprises means for coupling the right hip module ($2_{RH}$) to the left hip module ($2_{LH}$) when both are used at the same time (see Fig. 2e where the exoskeleton (1) is formed by the right hip module ($2_{RH}$) to the left hip module ($2_{LH}$)). Note that, when a hip module ($2_{RH}$, $2_{LH}$) is worn by the user, said hip module ($2_{RH}$, $2_{LH}$) is always coupled to the lumbar support (4). Therefore, when both hip modules ($2_{RH}$, $2_{LH}$) are worn by the user, they are both connected to opposite sides of the lumbar support (4) by means of the respective lumbar support coupling means, i.e. they are both connected one to the other.

The right hip module ($2_{RH}$) further comprises sensors for determining the kinematic condition of the right hip biological joint. Preferably, these sensors comprise inertial motion units, angular position sensors, and force sensors. These sensors can be provided in any position of the structure of the right hip module ($2_{RH}$). In particular, the right hip module ($2_{RH}$) comprises a shoulder orientation sensor intended to detect the orientation of the shoulder of the patient. Thereto, the shoulder orientation sensor may be fastened to the shoulder of the patient, i.e. by attaching it to the clothing of the patient or else using dedicated means such as a band provided with Velcro® or the like. In any case the number and position of the sensors of the right hip module ($2_{RH}$) is selected according to known considerations such that the information obtained is enough to sufficiently characterize the kinematic condition of the right hip biological joint of the patient.

The right hip module ($2_{RH}$) further comprises a right hip controller ($23_{RH}$) configured to autonomously calculate and command a desired trajectory for the right hip powered joint. Indeed, since the right hip module is configured to be in electrical communication with other modules, i.e. the left hip module, the right knee module and/or the left knee module, if worn by the patient, the right hip module ($2_{RH}$) is provided with all the information regarding the kinematic condition of those joints that need to be taken into account for rendering a natural gait when the patient walks aided by the exoskeleton.

c) Left knee module ($2_{LK}$)
The mechanical configuration of the left knee module ($2_{LK}$) is similar to that disclosed above with respect to the right knee module ($2_{RK}$).

d) Left hip module ($2_{LH}$)
The mechanical configuration of the left hip module ($2_{LH}$) is similar to that disclosed above with respect to the left hip module ($2_{LH}$).

e) Lumbar support (4)
The lumbar support (4) is known in this field to provide better and more convenient support for the exoskeleton (1) whenever a hip module ($2_{RH}$, $2_{LH}$) is present. The lumbar support (4) comprises an essentially flat or thin pad configured to abut against the lumbar area of the patient. Known dedicated fastening means are used for fastening the lumbar support to the patient, such as e.g. bands having Velcro® surfaces of the like. The lumbar support is used always in combination with either of the hip modules, or with both.

In all cases, multimaster electrical communication means (3) are provided to connect the modules ($2_{RK}$, $2_{LK}$,

$2_{RH}$, $2_{LH}$) present in the particular exoskeleton configuration (1). When in the full exoskeleton (1) configuration, the communication means (3) are preferably a multimaster bus running from the controller ($23_{RK}$) of the right knee module ($2_{RK}$), upwards along said right leg for connection with the controller ($23_{RH}$) of the right hip module ($2_{RH}$), crosswise along the lumbar region of the patient towards the controller ($23_{LH}$) of the left hip module ($23_{LH}$), and then downwards along the left leg for connection to the controller ($23_{LK}$) of the left knee module ($2_{LK}$). In other configurations the communication means (3) are adapted in accordance with the modules ($2_{RK}$, $2_{LK}$, $2_{RH}$, $2_{LH}$) present in the exoskeleton (1).

These four modules ($2_{RK}$, $2_{LK}$, $2_{RH}$, $2_{LH}$) and the lumbar support (4) can be combined for rendering a number of different exoskeleton configurations (1), some of which are shown in Fig. 1 and Figs. 2a-2e.

In Fig. 1, a full exoskeleton (1) is shown comprising all four modules ($2_{RK}$, $2_{LK}$, $2_{RH}$, $2_{LH}$) and the lumbar support (4). The knee modules ($2_{RK}$, $2_{LK}$) are coupled to the respective hip modules ($2_{RH}$, $2_{LH}$) by means of the rail and groove coupling means disclosed above, both therefore sharing the thigh fastening means.

In Fig. 2a, a configuration having only the knee modules ($2_{RK}$, $2_{LK}$) is shown.

In Fig. 2b, a configuration having only one knee module ($2_{LK}$) is shown.

In Fig. 2c, a configuration having the left knee module ($2_{LK}$) and the left hip ($2_{LH}$) module is shown. In this case, again the left knee module ($2_{LK}$) is coupled to the left hip module ($2_{LH}$) using the rail and groove coupling means disclosed above. Also, in this case the left hip module ($2_{LH}$) is connected to the lumbar support (4).

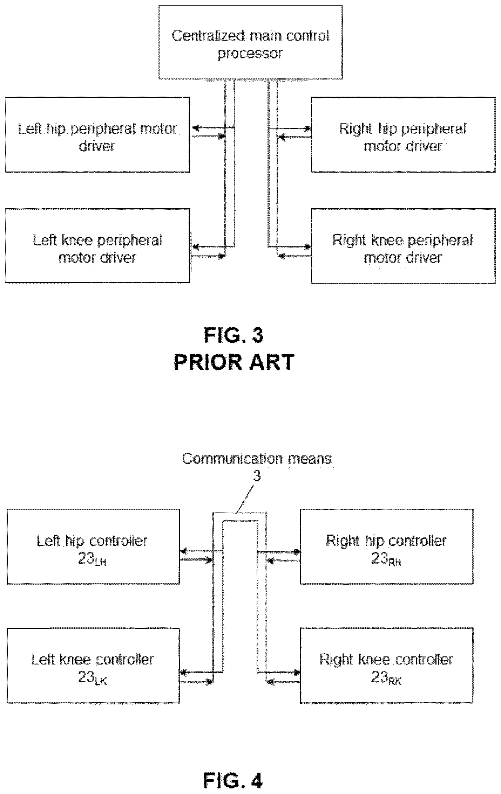

In Fig. 3d, a configuration having only the left hip module ($2_{LH}$) is shown.

In Fig. 3e, a configuration having the left hip module ($2_{LH}$) and the right hip module ($2_{RH}$) is shown.

Fig. 3 shows a schematic view of the centralized control architecture corresponding to a prior art exoskeleton. A centralized main control processor, i.e. master, is connected to a number of peripheral joint motor drivers, i.e. slaves, corresponding to the powered joints of the exoskeleton. The centralized main control processor carries out all the processing steps for receiving sensor information, calculating a trajectory for each powered joint in a coordinated manner for ensuring a natural gait, and then providing the corresponding signals to the drivers for actuating the joints. The centralized main control processor is usually located at the lumbar support.

This configuration requires the centralized main control processor to always be present for the exoskeleton to operate. Therefore, even if the exoskeleton allowed a particular powered joint to be dispensed with, still the centralized control processor, and therefore the lumbar support, needs to be worn by the patient. This configuration does not allow any flexibility as to the number and position of the powered joints comprised by the exoskeleton.

Fig. 4 shows the control architecture used by the exoskeleton (1) of the present invention. There is no centralized main control processor, i.e. there is no master controller. On the other hand, each and every module ($2_{RK}$, $2_{LK}$, $2_{RH}$, $2_{LH}$) comprises a dedicated controller ($23_{RK}$, $23_{LK}$, $23_{RH}$, $23_{LH}$). Therefore, in the present example, the right knee module ($2_{RK}$) comprises a right knee controller ($23_{RK}$), the left knee module ($2_{LK}$) comprises a left knee controller ($23_{LK}$), the right hip module ($2_{RH}$) comprises a right hip controller ($23_{RH}$), and the left hip module ($2_{LH}$) comprises a left hip controller ($23_{LH}$). These four controllers ($23_{RK}$, $23_{LK}$, $23_{RH}$, $23_{LH}$) are connected to a multimaster electrical communication means (3) ensuring that the information obtained by the sensors belonging to each of the modules ($2_{RK}$, $2_{LK}$, $2_{RH}$, $2_{LH}$) is automatically shared with the other modules. Thereby, each of the controllers ($23_{RK}$, $23_{LK}$, $23_{RH}$, $23_{LH}$) can calculate and command the trajectory only of the corresponding powered joint in coordination with the trajectory of the rest of the powered joints present in the exoskeleton (1) at any given moment.

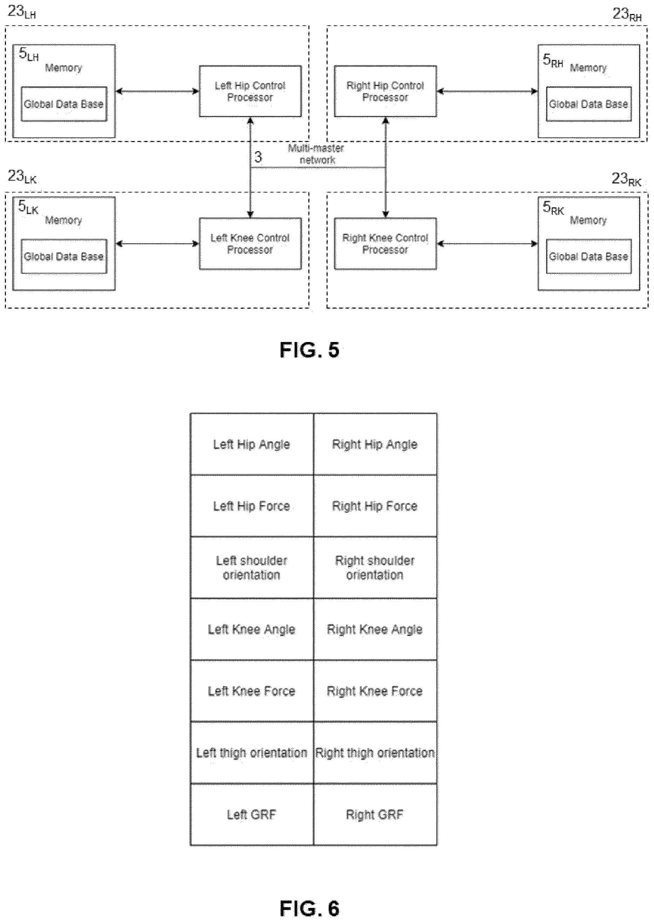

Fig. 5 shows this architecture in more detail. Each controller ($23_{RK}$, $23_{LK}$, $23_{RH}$, $23_{LH}$) comprises a corresponding processor and memory ($5_{RK}$, $5_{LK}$, $5_{RH}$, $5_{LH}$). Each memory ($5_{RK}$, $5_{LK}$, $5_{RH}$, $5_{LH}$) stores a global data base with the information provided with all the sensors of the exoskeleton (1). In the present exemplary exoskeleton (1), the sensors are those shown in the chart of Fig. 6. The sensors connected to the left hip controller ($23_{LH}$) are left hip angle, left hip force, and left shoulder orientation. The sensors connected to the left knee controller ($23_{LK}$) are left knee angle, left knee force, left thigh orientation and left GRF. The sensors connected to the right hip controller ($23_{RH}$) are right hip angle, right hip force, and right shoulder orientation. The sensors connected to the right knee controller ($23_{RK}$) are right knee angle, right knee force, right thigh orientation and right GRF. Each of these controllers ($23_{RK}$, $23_{LK}$, $23_{RH}$, $23_{LH}$) periodically receives the information from the relevant sensors and stores said sensor information in the local global data base. Additionally, each of the controllers ($23_{RK}$, $23_{LK}$, $23_{RH}$, $23_{LH}$) periodically sends said sensor information through the multimaster communication means (3). Further additionally, each of the controllers ($23_{RK}$, $23_{LK}$, $23_{RH}$, $23_{LH}$) collects from the multimaster communication means (3) the sensor information provided by other controllers ($23_{RK}$, $23_{LK}$, $23_{RH}$, $23_{LH}$) and stores it in the corresponding memory ($5_{RK}$, $5_{LK}$, $5_{RH}$, $5_{LH}$). The global data base in each of the memories ($5_{RK}$, $5_{LK}$, $5_{RH}$, $5_{LH}$) of the controllers ($23_{RK}$, $23_{LK}$, $23_{RH}$, $23_{LH}$) is thereby periodically updated, i.e. the global data base of each of the controllers ($23_{RK}$, $23_{LK}$, $23_{RH}$, $23_{LH}$) has essentially the same information at any moment.

Therefore, each of said controllers ($23_{RK}$, $23_{LK}$, $23_{RH}$, $23_{LH}$) can calculate the relevant trajectory based on the information stored in the corresponding memory ($5_{RK}$, $5_{LK}$, $5_{RH}$, $5_{LH}$) and still ensure that the trajectories of all powered joints are coordinated to render a natural gait. In particular, once each global data base of each of the controllers ($23_{RK}$, $23_{LK}$, $23_{RH}$, $23_{LH}$) is updated, any suitable method is used for comparing the values of the global data base with reference values associated to each walking phase. Walking phases are, e.g. Stopped, Loading Response, Mid-Stance, Terminal Stance, Pre-Swing, Initial Swing, Mid Swing, Terminal Swing. Each of these phases are coincident for joints of the same leg while being out of phase with respect to the opposite leg. That is, when the right leg is in the Stance phase, the left leg is in the Swing phase (unless when both are Stopped). For each joint, the trajectory between a phase and the next phase is calculated by the controller ($23_{RK}$, $23_{LK}$, $23_{RH}$, $23_{LH}$) of the module ($2_{RK}$, $2_{LK}$, $2_{RH}$, $2_{LH}$) corresponding to said joint. The trajectory is calculated using a suitably trained Central Pattern Generator algorithm as disclosed in detail below. By maintaining the global data base of each controller ($23_{RK}$, $23_{LK}$, $23_{RH}$, $23_{LH}$) updated, synchronism between joints is ensured.

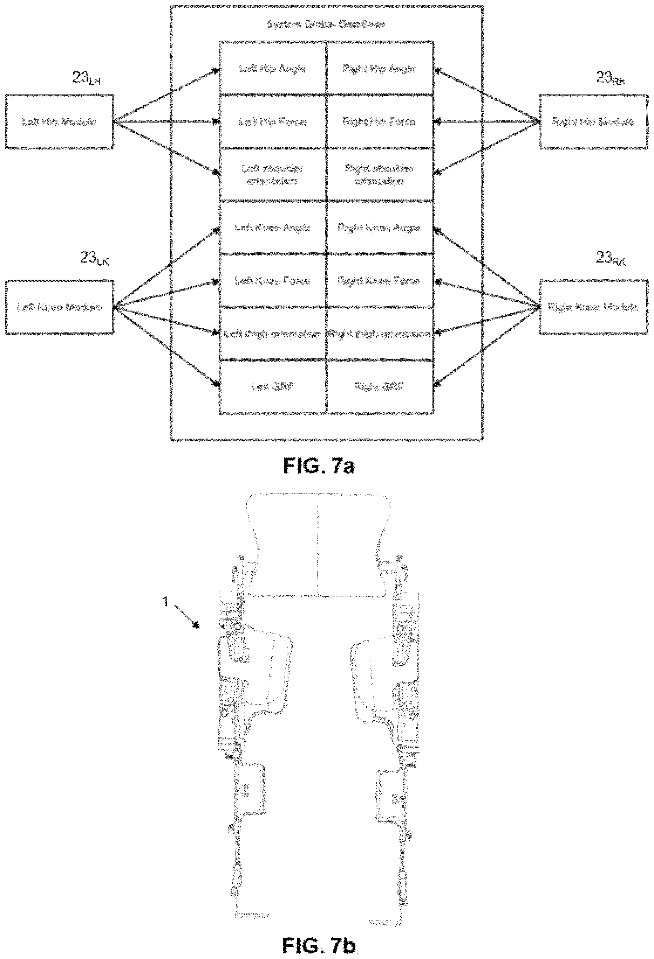

Fig. 7b shows a full exoskeleton (1) comprising all four of the modules disclosed in the present application. In this case, each controller ($23_{RK}$, $23_{LK}$, $23_{RH}$, $23_{LH}$) is connected to the relevant sensor and the information provided by those sensors is available in the corresponding global database as shown in Fig. 7a.

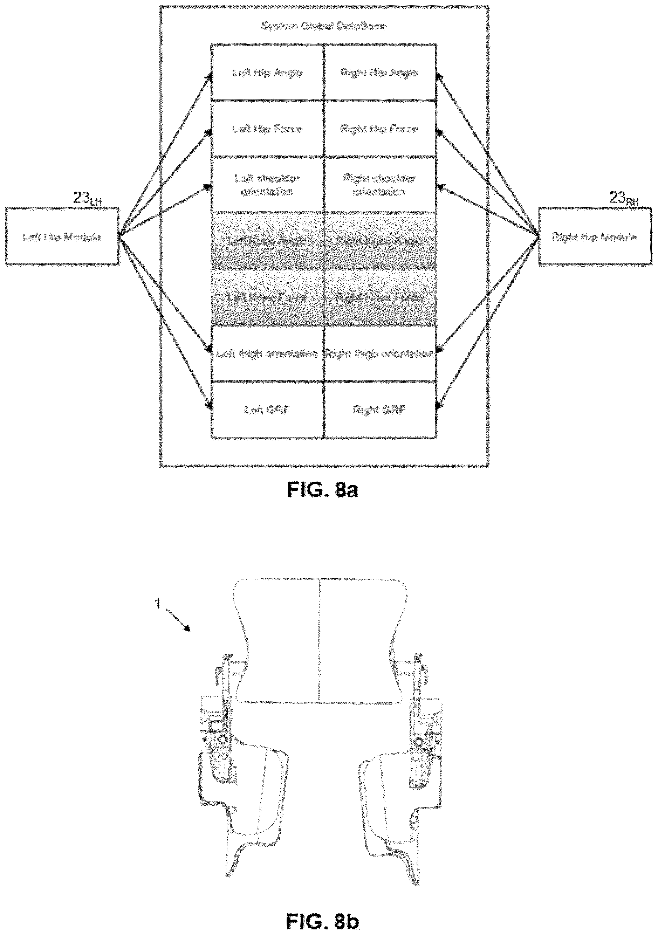

Fig. 8b shows a partial exoskeleton (1) comprising only the two hip modules ($2_{RH}$, $2_{LH}$) and also the lumbar support (4). In this case, knee angle and knee force are not available for any of the limbs because no knee modules ($2_{RK}$, $2_{LK}$) are present. In this case, however, thigh orientation sensor and GRF sensor are connected to the corresponding hip modules ($2_{RH}$, $2_{LH}$), and the information provided by those sensors is therefore available in the corresponding global data base as shown in Fig. 8a.

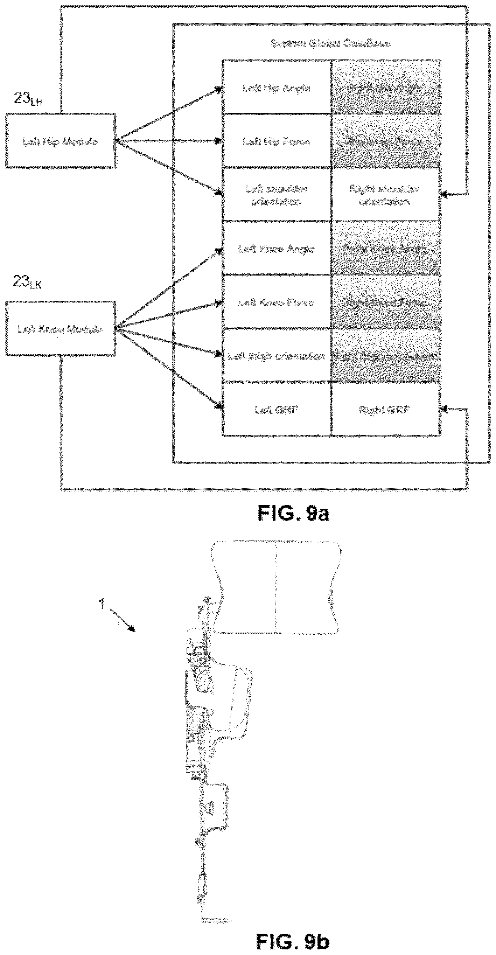

Fig. 9b shows a partial exoskeleton (1) comprising the left knee module ($2_{LK}$) and the left hip module ($2_{LH}$), as well as the lumbar support (4). In this case, as disclosed in detail above, the left knee module ($2_{RK}$) is mechanically coupled to the left hip module ($2_{RH}$), such that they both mechanically behave as a single part. Since no right knee or hip modules ($2_{RK}$, $2_{RH}$), are present in this configuration, right hip angle, right hip force, right knee angle, right knee force, and right thigh orientation are not available. However, in this case the right shoulder orientation and right GRF are connected respectively to the left hip module ($2_{LH}$) and the left knee module ($2_{LK}$), and the information provided by those sensors is therefore available in the corresponding global data base as shown in Fig. 9a.

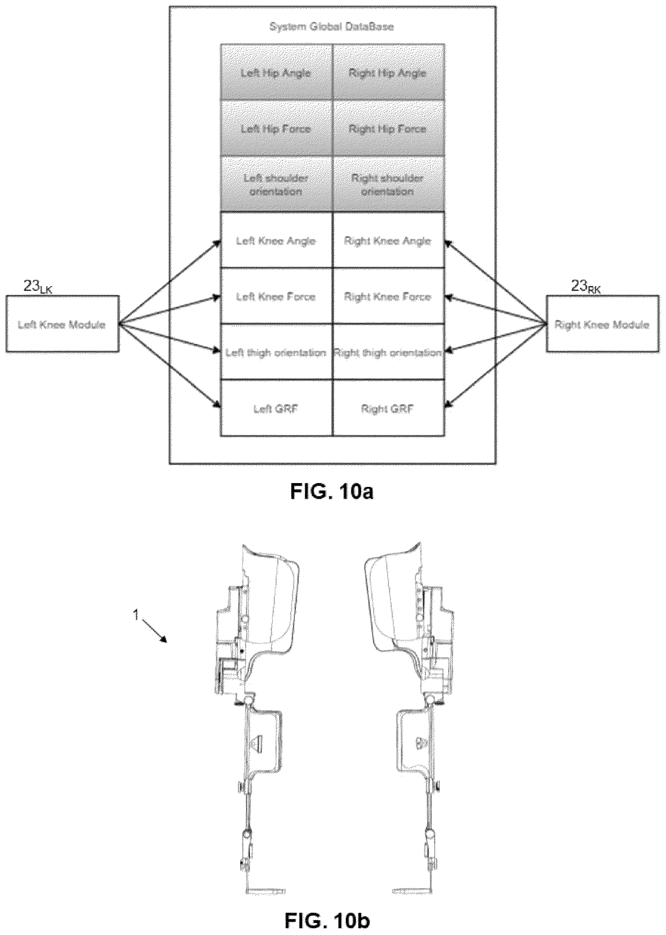

Fig. 10b shows a partial exoskeleton (1) comprising the right and left knee modules ($2_{RK}$, $2_{LK}$). Since no hip module ($2_{RH}$, $2_{LH}$) is present, no lumbar support (4) is needed and no right shoulder orientation sensor is needed. The knee modules ($2_{RK}$, $2_{LK}$) are then connected to the respective knee angle sensors, knee force sensors, thigh orientation sensors and GRF sensors, and the information provided by those sensors is therefore available in the corresponding global data base as shown in Fig. 10a.

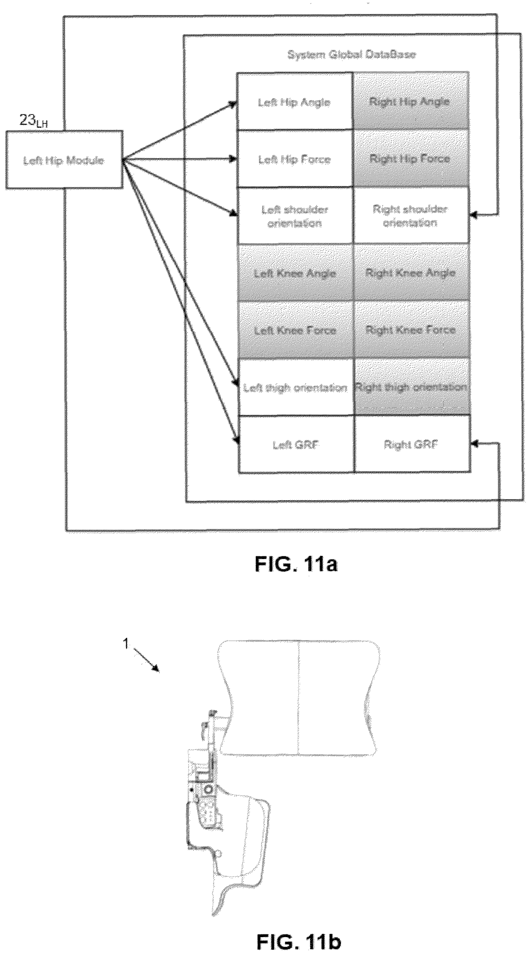

Fig. 11 shows a partial exoskeleton (1) comprising only the left hip module ($2_{LH}$) and, naturally, the lumbar support (4). In this case, the left hip module ($2_{LH}$) is connected to the right GRF sensor and to the right shoulder orientation sensor, as well as to the left thigh orientation sensor and the left GRF sensor. The left hip module ($2_{LH}$) is also connected to the left hip angle sensor, the left hip force sensor and the left shoulder orientation sensor. The information provided by these sensors is therefore available in the corresponding global data base as shown in Fig. 11a.

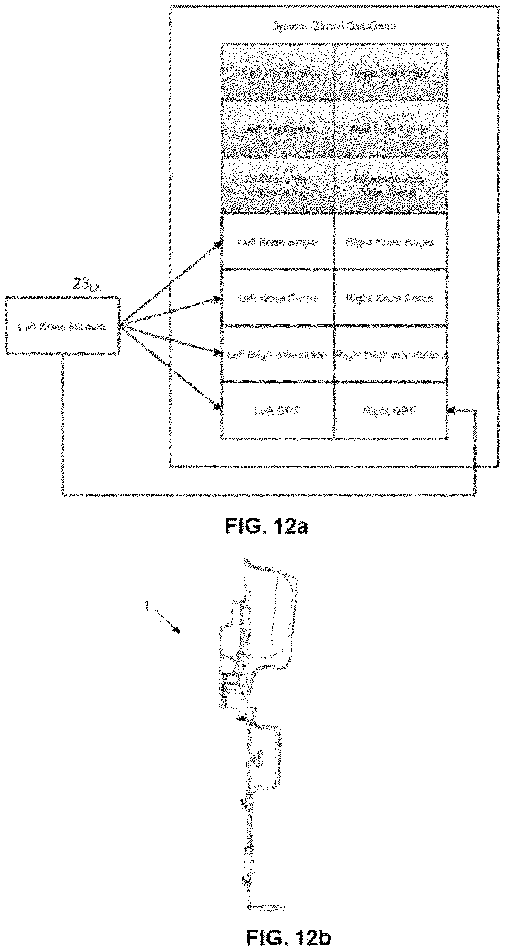

Fig. 12b shows a partial exoskeleton (1) comprising only the left knee module ($2_{LK}$). Since no right knee module ($2_{RK}$) is present, the left knee module ($2_{LK}$) is connected to the right knee angle sensor, the right knee force sensor, the right thigh orientation sensor and the right GRF sensor. The information provided by these sensors is therefore available in the corresponding global data base as shown in Fig. 12a.

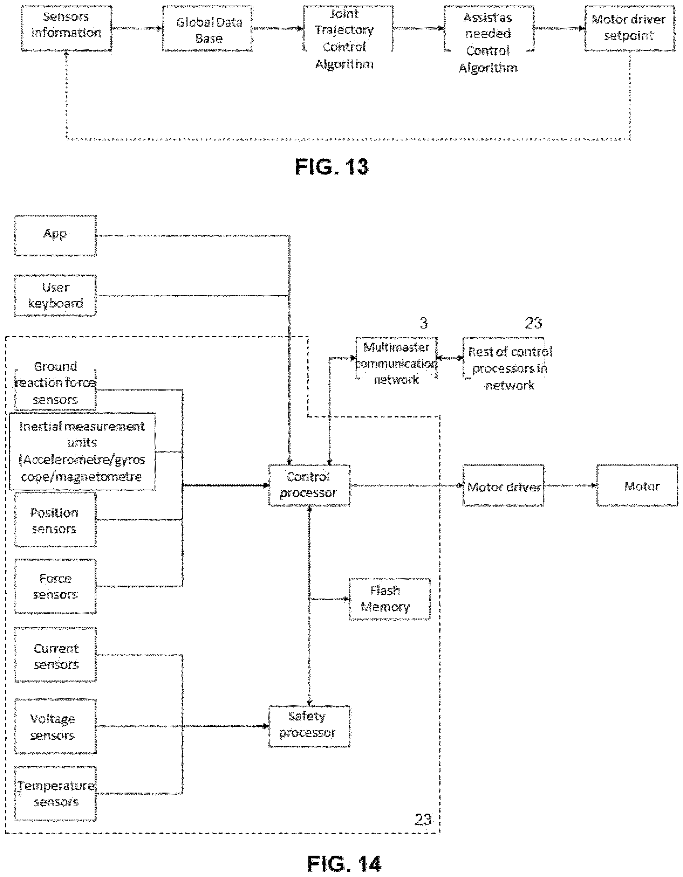

Fig. 13 schematically shows the control loop carried out by the exoskeleton (1) of the invention for ensuring a natural and coordinated gait between all modules ($2_{RK}$, $2_{LK}$, $2_{RH}$, $2_{LH}$). First, the information from the sensors is gathered and provided to the multimaster communication means (3), whereby each module ($2_{RK}$, $2_{LK}$, $2_{RH}$, $2_{LH}$) can receive the information and store it in the corresponding global database. The information in the global data base store in the memory ($5_{RK}$, $5_{LK}$, $5_{RH}$, $5_{LH}$) of each of the modules ($2_{RK}$, $2_{LK}$, $2_{RH}$, $2_{LH}$) is therefore updated at all times. Further, should a particular module ($2_{RK}$, $2_{LK}$, $2_{RH}$, $2_{LH}$) not be present in a particular exoskeleton configuration, and should the information provided by a sensor belonging to said module ($2_{RK}$, $2_{LK}$, $2_{RH}$, $2_{LH}$) be essential for calculating the trajectories of the powered joints of other modules ($2_{RK}$, $2_{LK}$, $2_{RH}$, $2_{LH}$) present in said particular exoskeleton configuration, then said sensor is connected to one of said other modules ($2_{RK}$, $2_{LK}$, $2_{RH}$, $2_{LH}$) present in the particular exoskeleton configuration. Then, the controller ($23_{RK}$, $23_{LK}$, $23_{RH}$, $23_{LH}$) of each of the modules gathers from the relevant memory ($5_{RK}$, $5_{LK}$, $5_{RH}$, $5_{LH}$) the information required for calculating the trajectory of the corresponding powered joint. Said trajectory is calculated and, thereafter, an algorithm intended to determine how much force needs to be transmitted to the powered joints depending on the force exerted by the patient is executed. Algorithms of this type are known in the art. Finally, a setpoint is sent to the relevant motor driver. This process is carried out periodically, thus ensuring coordination between the powered joints included in the particular exoskeleton (1) configuration for rendering a natural gait.

Fig. 14 schematically shows the connections between a particular controller ($23_{RK}$, $23_{LK}$, $23_{RH}$, $23_{LH}$) and the remaining components of the exoskeleton (1). This figure further shows the processor of the controller ($23_{RK}$, $23_{LK}$, $23_{RH}$, $23_{LH}$) receiving information from the patient or the operator of the exoskeleton (1) by means of a keyboard or an app. The controller ($23_{RK}$, $23_{LK}$, $23_{RH}$, $23_{LH}$) further receives the information from the relevant sensors. The controller ($23_{RK}$, $23_{LK}$, $23_{RH}$, $23_{LH}$) is in communication with the multimaster communication means (3), and the controllers ($23_{RK}$, $23_{LK}$, $23_{RH}$, $23_{LH}$) belonging to the rest of the modules ($2_{RK}$, $2_{LK}$, $2_{RH}$, $2_{LH}$) are also connected to the multimaster communication means (3). The processor is further connected to the relevant motor driver for sending the calculated setpoint needed for the powered joint to follow the desired trajectory.

In parallel, a safety processor gathers the information provided by current, voltage and temperature sensors connected to the motor of the relevant powered joint for detecting any malfunction. In particular, the values obtained by the current, voltage and temperature sensors are compared with predetermined values indicative of malfunction, e.g. abnormally high motor current is usually caused by a blocked motor. In that case, the controller ($23_{RK}$, $23_{LK}$, $23_{RH}$, $23_{LH}$) of the module ($2_{RK}$, $2_{LK}$, $2_{RH}$, $2_{LH}$) having a damaged motor commands a fail-safe routine for all modules ($2_{RK}$, $2_{LK}$, $2_{RH}$, $2_{LH}$), i.e. commands each powered joint to slowly move to an initial or standby position.

**Description of a particularly preferred Central Pattern Generator algorithm**

The generation of the angular trajectory in each exoskeleton joint is carried out in each module independently, but taking into account information of the other modules in the loop. Each module has its own pattern generator that relates with the rest of the modules forming a group of nodes that are able to create rhythmic and coordinated signals used for the generation of joint trajectory, according to the Central Pattern Generators (CPG) theory. CPGs are specially suitable as a control strategy for the modular exoskeleton due to its capacity of working decentralized and distributing the processing load of the controllers. Its functioning allows the collaboration between modules, but also permits them to work independently. This means that each module programmed with the pattern generator or CPG algorithm can function in cooperation to other actuated joint modules in the network, coordinating among themselves and modifying their trajectories according to the information received from the sensors.

In the particularly preferred trajectory calculation method designed to work on the modular exoskeleton, a Hopf oscillator has been used to create a CPG associated to each module. These CPGs have been trained with the corresponding joint trajectory for the gait pattern by means of the Dynamic Hebbian learning method applied to adaptive frequency oscillators. To accomplish this, the Hopf oscillators network belonging to each actuated joint module, learn in frequency the desired trajectory, called adaptive Hopf oscillator. This means that during the training process the oscillators of the network modify their frequency ($\omega_i$), the amplitude ($\alpha_i$) and their phase ($\Phi_i$) relationships to obtain the training signal. After the training process, these values (frequency, amplitude and phase) are enough to replicate the learnt signal, being able to create the pattern autonomously.

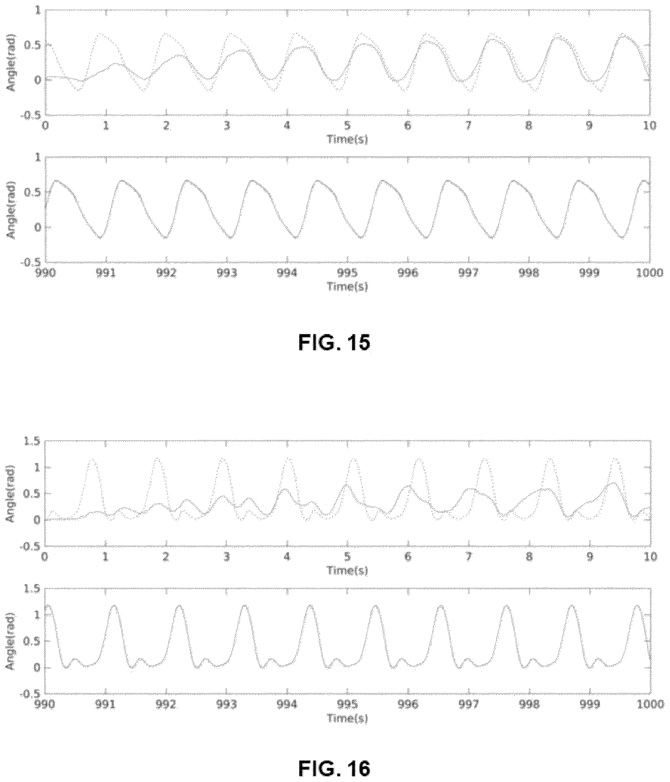

As these values are specific for each joint, both knee and hip joints need to be trained such that they use the same algorithm but changing the trained variables. The fundamental frequency is calculated so that it corresponds with the gait pattern frequency, the rest of the variables adapt their value to replicate the desired trajectory. Fig. 15 and 16 show the adaptation of the oscillator -in solid line- to the walking pattern used as learning signals -in dashed line- while the parameters of the oscillator stabilise. The first (upper graph) and last (lower graph) seconds of the learning process are compared for both knee and hip signals. When the learning parameters converge, the oscillator works properly and is capable to replicate the learning signal, as shown in the mentioned graphs.

The implementation into each module requires the use of new parameters that modulate output signal and permit module's communication, allowing gait synchronization. Each module uses its own pattern generator with the values of amplitude ($\alpha_i$) and phase ($\Phi_i$) learned in learning phase, corresponding with the biological joint that is assisted. The signal can be modulated in amplitude with an amplitude gain ($Gain_\alpha$) that permits varying actuated joint flexion and extension range in real time. The pattern can be modified in frequency ($\omega_i$), distinguished between stance frequency and swing frequency.

To ensure the synchronization between modules, a synchronization term ($k_j$) is introduced. There can be such communication terms in a module as modules in the configuration. In a particularly preferred embodiment, two communication terms are shared for each module, one to assure the coordination in its own lower limb and other to assure the coordination with the opposite lower limb.

The equations that describe the joint control strategy are:

$$\dot{x}_i = \gamma \left( \mu - r_i^2 \right) x_i - \omega_i \, y_i + \tau \sin(R_i - \phi_i)$$

$$\dot{y}_0 = \gamma \left( \mu - r_0^2 \right) y_0 + \omega_0 \, x_0 + \sum k_j$$

$$\dot{y}_i = \gamma \left( \mu - r_i^2 \right) y_i + \omega_i \, x_i \; ; \; i = 1 \dots N$$

$$\omega_0 = f(\omega_{swing}, \omega_{stance})$$

$$\omega_i = \omega_0 \cdot (i+1)$$

$$R_i = \frac{\omega_i}{\omega_0} \, sgn(x_0) \cos^{-1}\left(-\frac{y_i}{r_i}\right)$$

$$k_j = f(x_j, y_j)$$

$$Q(t) = \sum_{i=0}^{N} Gain_\alpha \cdot \alpha_i \cdot x_i$$

Where Q is the output signal corresponding to the angular position of the joint, $x_i$ and $y_i$ are the variables that characterize Hopf oscillators in the module, $x_j$ and $y_j$ are the first oscillator's variables of one of the coupled modules, $R_i$ assures that the oscillators are in the pattern generator are in-phase, $N$ is the number of oscillators in the pattern generator, and j is the number of modules in the exoskeleton configuration.

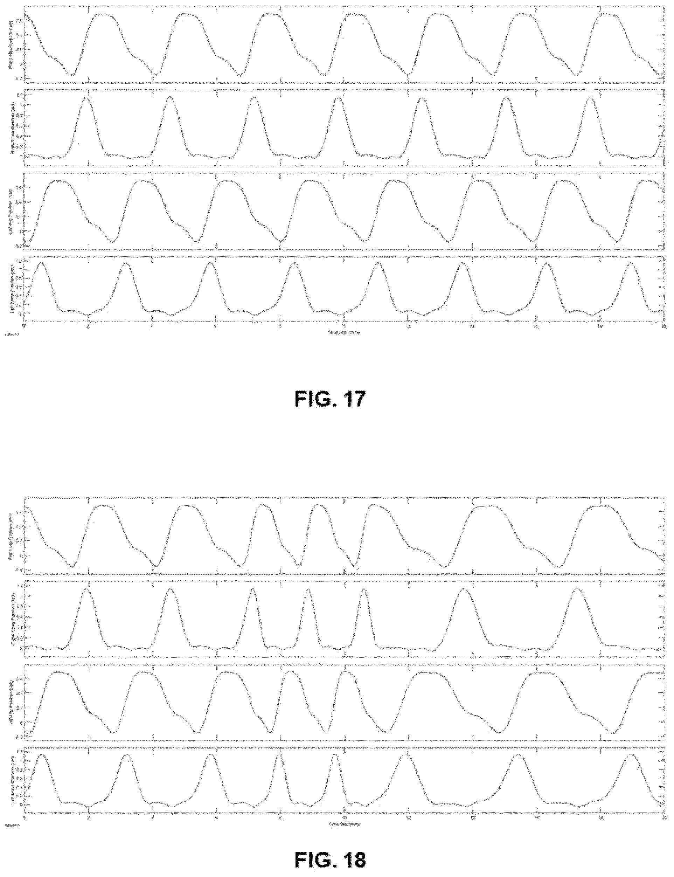

The term $k_j$ depends on the number of modules attached, it can be zero in case of one independent module. However, when several modules are connected, the variable achieves that the phase relation between the first oscillator of each module will be stable. The $y_i$ value is modified by the value of $x_j$ and $y_j$, and at the same time values $x_i$ and $y_i$ modify the value of $y_j$. These equations allow the correct operation of the modules in every configuration setting three variables: $Gain_\alpha$, $\omega_{swing}$ and $\omega_{stance}$, that are calculated using the sensors information or the parameters introduced by the therapist. The result of the trajectories calculated by the network of CPGs in the full exoskeleton configuration is shown in Fig. 17. Changing these variables the gait pattern rhythm can be modified while at the same time keeping the synchronism, as shown in Fig 18.

## Claims

1. Exoskeleton (1) comprising a plurality of autonomously operable modules ($2_{RK}$, $2_{LK}$, $2_{RH}$, $2_{LH}$) each configured for assisting a corresponding biological joint of a patient wearing the exoskeleton (1),

   wherein each module ($2_{RK}$, $2_{LK}$, $2_{RH}$, $2_{LH}$) comprises a mechanical structure comprising one actuated joint, the mechanical structure further comprising fastening means ($21_{RK}$, $21_{LK}$, $21_{RH}$, $21_{LH}$) for fastening the module ($2_{RK}$, $2_{LK}$, $2_{RH}$, $2_{LH}$) to portions of a limb located at either side of said corresponding biological joint, the mechanical structure further comprising releasable mechanical coupling means for releasably coupling each module ($2_{RK}$, $2_{LK}$, $2_{RH}$, $2_{LH}$) to at least one adjacent module ($2_{RK}$, $2_{LK}$, $2_{RH}$, $2_{LH}$), and
   wherein each module ($2_{RK}$, $2_{LK}$, $2_{RH}$, $2_{LH}$) further comprises a plurality of sensors (22) configured to determine the kinematic condition of the corresponding biological joint said module ($2_{RK}$, $2_{LK}$, $2_{RH}$, $2_{LH}$) is configured to be fastened to,
   wherein
   each module ($2_{RK}$, $2_{LK}$, $2_{RH}$, $2_{LH}$) further comprises a dedicated controller ($23_{RK}$, $23_{LK}$, $23_{RH}$, $23_{LH}$) connected to the actuated joint of said module ($2_{RK}$, $2_{LK}$, $2_{RH}$, $2_{LH}$),
   the exoskeleton (1) further comprises multimaster electrical communication means (3) between the dedicated controllers ($23_{RK}$, $23_{LK}$, $23_{RH}$, $23_{LH}$) of the modules ($2_{RK}$, $2_{LK}$, $2_{RH}$, $2_{LH}$) for sharing the kinematic condition of the biological joints each module ($2_{RK}$, $2_{LK}$, $2_{RH}$, $2_{LH}$) is fastened to, and
   where the dedicated controller ($23_{RK}$, $23_{LK}$, $23_{RH}$, $23_{LH}$) of each module ($2_{RK}$, $2_{LK}$, $2_{RH}$, $2_{LH}$) is configured for:

      - collecting information determining the kinematic condition of the corresponding biological joint to which said module ($2_{RK}$, $2_{LK}$, $2_{RH}$, $2_{LH}$) is configured to be fastened from the sensors belonging to said module ($2_{RK}$, $2_{LK}$, $2_{RH}$, $2_{LH}$),
      - sharing said information with the remaining modules through the multimaster electrical communication means (3),
      - determining which other modules ($2_{RK}$, $2_{LK}$, $2_{RH}$, $2_{LH}$) of the exoskeleton (1) the patient is wearing based on the information available through the multimaster electrical communication means (3), and
      - autonomously calculating and commanding, based on the information about the kinematic condition of the biological joints of the patient shared through the multimaster electrical communication means (3), a desired trajectory of the actuated joint of said module ($2_{RK}$, $2_{LK}$, $2_{RH}$, $2_{LH}$) for assisting the movement of the corresponding biological joint in coordination with the kinematic condition of other biological joints, such that the exoskeleton (1) operates according to a multi-master decentralized control strategy which does not require the patient to wear all the modules ($2_{RK}$, $2_{LK}$, $2_{RH}$, $2_{LH}$), where the step of calculating the desired trajectory of the actuated joint of a module ($2_{RK}$, $2_{LK}$, $2_{RH}$, $2_{LH}$) is carried out using a neural network of Central Pattern Generator algorithms comprising adaptive Hopf oscillators, and where each Central Pattern Generator algorithm is previously trained with a desired trajectory of the corresponding biological joint by means of a Dynamic Hebbian learning method applied to adaptive Hopf oscillators.

2. Exoskeleton (1) according to claim 1, where the modules ($2_{RK}$, $2_{LK}$, $2_{RH}$, $2_{LH}$) are configured for assisting a corresponding biological joint of a lower limb of the patient wearing the exoskeleton (1).

3. Exoskeleton (1) according to claim 2, comprising a right knee module ($2_{RK}$), a left knee module ($2_{LK}$), a right hip module ($2_{RH}$), and a left hip module ($2_{LH}$), and further comprising a lumbar support (4) configured to be coupled to the right hip module ($2_{RH}$) and/or the left hip module ($2_{LH}$).

4. Exoskeleton (1) according to claim 3, wherein the controller ($23_{RK}$, $23_{LK}$, $23_{RH}$, $23_{LH}$) of each module ($2_{RK}$, $2_{LK}$, $2_{RH}$, $2_{LH}$) autonomously calculates and commands the desired trajectory of the actuated joint of said module ($2_{RK}$, $2_{LK}$, $2_{RH}$, $2_{LH}$) based on the kinematic condition of adjacent biological joints and on the kinematic condition of the opposite biological joint, where the exoskeleton (1) is operable in the following configurations:

- full exoskeleton (1) comprising the right knee module ($2_{RK}$), the left knee module ($2_{LK}$), the right hip module ($2_{RH}$) and the left hip module ($2_{LH}$);
- partial exoskeleton (1) consisting of the right knee module ($2_{RK}$), the left knee module ($2_{LK}$), the right hip module ($2_{RH}$) or the left hip module ($2_{LH}$) alone;
- partial exoskeleton (1) consisting of the right hip module ($2_{RH}$) and the right knee module ($2_{RK}$), and thus lacking the left hip module ($2_{LH}$) and the left knee module ($2_{LK}$);
- partial exoskeleton (1) consisting of the left hip module ($2_{LH}$) and the left knee module ($2_{LK}$), and thus lacking the right hip module ($2_{RH}$) and the right knee module ($2_{RK}$);
- partial exoskeleton (1) consisting of the right hip module ($2_{RH}$) and the left hip module ($2_{LH}$), and thus lacking the right knee module ($2_{RK}$) and the left knee module ($2_{LK}$); and
- partial exoskeleton (1) consisting of the right knee module ($2_{RK}$) and the left knee module ($2_{LK}$), and thus lacking the right hip module ($2_{RH}$) and the left hip module ($2_{LH}$).

5. Exoskeleton (1) according to any of the previous claims, wherein the multimaster electrical connection means (3) between the controllers ($23_{RK}$, $23_{LK}$, $23_{RH}$, $23_{LH}$) of the modules ($2_{RK}$, $2_{LK}$, $2_{RH}$, $2_{LH}$) comprise wired multimaster electrical connection means.

6. Exoskeleton (1) according to claim 5, wherein the wired multimaster electrical connection means (3) between the controllers ($23_{RK}$, $23_{LK}$, $23_{RH}$, $23_{LH}$) of the modules ($2_{RK}$, $2_{LK}$, $2_{RH}$, $2_{LH}$) is configured to run from the controller ($23_{RK}$) of the module ($2_{RK}$) closest to the right foot of the patient, upwards along said right lower limb for connection with all right limb controllers ($23_{RH}$), crosswise along the lumbar region of the patient, and then downwards along the lower limb for connection with all left limb controllers ($23_{LH}$) down to the controller ($23_{LK}$) of the module ($2_{LK}$) closest to the left foot of the patient.

7. Exoskeleton (1) according to any of the previous claims, wherein the multimaster electrical connection means (3) comprise wireless multimaster electrical connection means.

8. Exoskeleton (1) according to any of the previous claims, wherein each dedicated controller ($23_{RK}$, $23_{LK}$, $23_{RH}$, $23_{LH}$) comprises a dedicated memory means ($5_{RK}$, $5_{LK}$, $5_{RH}$, $5_{LH}$) for storing a global database containing information determining the kinematic condition of the biological joints each module ($2_{RK}$, $2_{LK}$, $2_{RH}$, $2_{LH}$) is configured to be fastened to.

9. Exoskeleton (1) according to any of the previous claims, wherein the releasable mechanically coupling means between adjacent modules comprise a slider tube in one module ($2_{RK}$, $2_{LK}$, $2_{RH}$, $2_{LH}$) suitable to be received by a complementary slider cavity in another module ($2_{RK}$, $2_{LK}$, $2_{RH}$, $2_{LH}$), where said releasable mechanically coupling means are adjustable as to the distance between said adjacent modules ($2_{RK}$, $2_{LK}$, $2_{RH}$, $2_{LH}$).

**10.** Non-therapeutical method for operating an exoskeleton (1) comprising a plurality of autonomously operable modules ($2_{RK}$, $2_{LK}$, $2_{RH}$, $2_{LH}$) each configured for assisting a corresponding biological joint of a patient wearing the exoskeleton (1),

where each module ($2_{RK}$, $2_{LK}$, $2_{RH}$, $2_{LH}$) comprises a mechanical structure comprising one actuated joint, the mechanical structure further comprising fastening means ($21_{RK}$, $21_{LK}$, $21_{RH}$, $21_{LH}$) for fastening the module ($2_{RK}$, $2_{LK}$, $2_{RH}$, $2_{LH}$) to portions of a limb located at either side of said corresponding biological joint, the mechanical structure further comprising releasable mechanical coupling means for releasably coupling each module ($2_{RK}$, $2_{LK}$, $2_{RH}$, $2_{LH}$) to at least one adjacent module ($2_{RK}$, $2_{LK}$, $2_{RH}$, $2_{LH}$),
where each module ($2_{RK}$, $2_{LK}$, $2_{RH}$, $2_{LH}$) further comprises a plurality of sensors configured to determine the kinematic condition of the corresponding biological joint said module ($2_{RK}$, $2_{LK}$, $2_{RH}$, $2_{LH}$) is configured to be fastened to,
where each module ($2_{RK}$, $2_{LK}$, $2_{RH}$, $2_{LH}$) further comprises a dedicated controller ($23_{RK}$, $23_{LK}$, $23_{RH}$, $23_{LH}$) connected to the actuated joint of said module ($2_{RK}$, $2_{LK}$, $2_{RH}$, $2_{LH}$),
and where the exoskeleton (1) further comprises multimaster electrical communication means (3) between the dedicated controllers ($23_{RK}$, $23_{LK}$, $23_{RH}$, $23_{LH}$) of the modules ($2_{RK}$, $2_{LK}$, $2_{RH}$, $2_{LH}$) for sharing the kinematic condition of the biological joints each module ($2_{RK}$, $2_{LK}$, $2_{RH}$, $2_{LH}$) is fastened to,
wherein the exoskeleton (1) operates according to a multi-master decentralized control strategy which does not require the patient to wear all the modules ($2_{RK}$, $2_{LK}$, $2_{RH}$, $2_{LH}$), where each dedicated controller ($23_{RK}$, $23_{LK}$, $23_{RH}$, $23_{LH}$) carries out the following steps:

- collecting information determining the kinematic condition of the corresponding biological joint to which said module ($2_{RK}$, $2_{LK}$, $2_{RH}$, $2_{LH}$) is configured to be fastened from the sensors of the module ($2_{RK}$, $2_{LK}$, $2_{RH}$, $2_{LH}$) comprising said dedicated controller ($23_{RK}$, $23_{LK}$, $23_{RH}$, $23_{LH}$);
- sharing said information with the controllers ($23_{RK}$, $23_{LK}$, $23_{RH}$, $23_{LH}$) of the remaining modules through the multimaster electrical communication means (3);
- determining which other modules of the exoskeleton (1) the patient is wearing based on the information available through the multimaster electrical communication means (3); and
- autonomously calculating and commanding a desired trajectory of the actuated joint of said module ($2_{RK}$, $2_{LK}$, $2_{RH}$, $2_{LH}$) for assisting the movement of the corresponding biological joint in coordination with the kinematic condition of other biological joints.

**11.** Non-therapeutical method according to claim 10, where the modules ($2_{RK}$, $2_{LK}$, $2_{RH}$, $2_{LH}$) are configured for assisting a corresponding biological joint of a lower limb of the patient wearing the exoskeleton (1).

**12.** Non-therapeutical method according to any of claims 10-11, further comprising the steps of:

- storing the information determining the kinematic condition of the corresponding biological joint each module ($2_{RK}$, $2_{LK}$, $2_{RH}$, $2_{LH}$) is configured to be fastened to in a respective global database comprised in the dedicated memory means ($5_{RK}$, $5_{LK}$, $5_{RH}$, $5_{LH}$) of each controller ($23_{RK}$, $23_{LK}$, $23_{RH}$, $23_{LH}$); and
- each controller ($23_{RK}$, $23_{LK}$, $23_{RH}$, $23_{LH}$) updating said global database by accessing periodically to the electrical communication means (3).

**13.** Non-therapeutical method according to any of claims 10-12, where the step of calculating the desired trajectory of the actuated joint of a module ($2_{RK}$, $2_{LK}$, $2_{RH}$, $2_{LH}$) is carried out using a neural network of Central Pattern Generator algorithms comprising adaptive Hopf oscillators.

**14.** Non-therapeutical method according to claim 13, where each Central Pattern Generator algorithm is previously trained with a desired trajectory of the corresponding biological joint by means of a Dynamic Hebbian learning method applied to adaptive Hopf oscillators.

**15.** Non-therapeutical method according to any of claims 13-14, where the neural network of Central Pattern Generator algorithms comprises coordination terms ($k_j$) for ensuring coordination between actuated joints of a limb and coordination between actuated joints of opposite limbs.

**Patentansprüche**

1. Exoskelett (1), umfassend eine Vielzahl von autonom bedienbaren Modulen ($2_{RK}$, $2_{LK}$, $2_{rh}$, $2_{LH}$), die jeweils dazu konfiguriert sind, ein entsprechendes biologisches Gelenk eines Patienten, der das Exoskelett (1) trägt, zu unterstützen,

   wobei jedes Modul ($2_{RK}$, $2_{LK}$, $2_{Rh}$, $2_{LH}$) eine mechanische Struktur umfasst, die ein betätigtes Gelenk umfasst, wobei die mechanische Struktur ferner Befestigungsmittel ($21_{RK}$, $21_{LK}$, $21_{RH}$, $21_{LH}$) zur Befestigung des Moduls ($2_{RK}$, $2_{LK}$, $2_{RH}$, $2_{LH}$) an Teilen einer Extremität, die sich auf beiden Seiten des entsprechenden biologischen Gelenks befinden, umfasst, wobei die mechanische Struktur ferner lösbare mechanische Kopplungsmittel zum lösbaren Koppeln jedes Moduls ($2_{RK}$, $2_{lk}$, $2_{rh}$, $2_{lh}$) an mindestens ein benachbartes Modul ($2_{RK}$, $2_{LK}$, $2_{RH}$, $2_{LH}$) umfasst, und
   wobei jedes Modul ($2_{RK}$, $2_{LK}$, $2_{RH}$, $2_{LH}$) ferner eine Vielzahl von Sensoren (22) umfasst, die dazu konfiguriert sind, den kinematischen Zustand des entsprechenden biologischen Gelenks zu bestimmen, an dem das Modul ($2_{RK}$, $2_{LK}$, $2_{RH}$, $2_{LH}$) gemäß Konfiguration zu befestigen ist,
   wobei jedes Modul ($2_{RK}$, $2_{LK}$, $2_{RH}$, $2_{LH}$) ferner eine fest zugeordnete Steuerung ($23_{RK}$, $23_{LK}$, $23_{rh}$, $23_{LH}$) umfasst, die mit dem betätigten Gelenk des Moduls ($2_{RK}$, $2_{LK}$, $2_{RH}$, $2_{LH}$) verbunden ist,
   das Exoskelett (1) ferner elektrische Multimaster-Kommunikationsmittel (3) zwischen den fest zugeordneten Steuerungen ($23_{RK}$, $23_{LK}$, $23_{RH}$, $23_{LH}$) der Module ($2_{RK}$, $2_{LK}$, $2_{RH}$, $2_{LH}$) zur Übermittlung des kinematischen Zustands der biologischen Gelenke, an denen jedes Modul ($2_{RK}$, $2_{LK}$, $2_{RH}$, $2_{LH}$) befestigt ist, umfasst, und
   wobei die fest zugeordnete Steuerung ($23_{RK}$, $23_{LK}$, $23_{RH}$, $23_{LH}$) jedes Moduls ($2_{RK}$, $2_{LK}$, $2_{RH}$, $2_{LH}$) konfiguriert ist, um:

   - Informationen, die den kinematischen Zustand des entsprechenden biologischen Gelenks bestimmen, an dem das Modul ($2_{RK}$, $2_{LK}$, $2_{RH}$, $2_{LH}$) gemäß Konfiguration zu befestigen ist, von den Sensoren zu erfassen, die zu diesem Modul ($2_{RK}$, $2_{LK}$, $2_{RH}$, $2_{LH}$) gehören,
   - die Informationen über die elektrischen Multimaster-Kommunikationsmittel (3) an die verbleibenden Module zu übermitteln,
   - basierend auf den durch die elektrischen Multimaster-Kommunikationsmittel (3) verfügbaren Informationen zu bestimmen, welche weiteren Module ($2_{RK}$, $2_{LK}$, $2_{RH}$, $2_{LH}$) des Exoskeletts (1) der Patient trägt, und
   - basierend auf den Informationen über den kinematischen Zustand der biologischen Gelenke des Patienten, die über die elektrischen Multimaster-Kommunikationsmittel (3) übermittelt werden, eine gewünschten Trajektorie des betätigten Gelenks des Moduls ($2_{RK}$, $2_{LK}$, $2_{RH}$, $2_{LH}$) zur Unterstützung der Bewegung des entsprechenden biologischen Gelenks in Abstimmung mit dem kinematischen Zustand anderer biologischer Gelenke autonom zu berechnen und zu steuern, sodass das Exoskelett (1) nach einer dezentralisierten Multimaster-Steuerungsstrategie arbeitet, bei der der Patient nicht alle Module ($2_{RK}$, $2_{LK}$, $2_{RH}$, $2_{LH}$) tragen muss, wobei der Schritt des Berechnens der gewünschten Trajektorie des betätigten Gelenks eines Moduls ($2_{RK}$, $2_{LK}$, $2_{RH}$, $2_{LH}$) unter Verwendung eines neuronalen Netzwerks von Central-Pattern-Generator-Algorithmen, die adaptive Hopf-Oszillatoren umfassen, durchgeführt wird und wobei jeder Central-Pattern-Generator-Algorithmus zuvor mithilfe einer dynamischen Hebbschen Lernmethode, die auf adaptive Hopf-Oszillatoren angewendet wird, mit einer gewünschten Trajektorie des entsprechenden biologischen Gelenks trainiert wird.

2. Exoskelett (1) gemäß Anspruch 1, wobei die Module ($2_{RK}$, $2_{LK}$, $2_{RH}$, $2_{LH}$) zur Unterstützung eines entsprechenden biologischen Gelenks einer unteren Extremität des Patienten, der das Exoskelett (1) trägt, konfiguriert sind.

3. Exoskelett (1) gemäß Anspruch 2, umfassend ein rechtes Kniemodul ($2_{RK}$), ein linkes Kniemodul ($2_{LK}$), ein rechtes Hüftmodul ($2_{RH}$) und ein linkes Hüftmodul ($2_{LH}$), und ferner umfassend eine Lumbalstütze (4), die dazu konfiguriert ist, an das rechte Hüftmodul ($2_{RH}$) und/oder das linke Hüftmodul ($2_{LH}$) gekoppelt zu werden.

4. Exoskelett (1) gemäß Anspruch 3, wobei die Steuerung ($23_{RK}$, $23_{LK}$, $23_{RH}$, $23_{LH}$) jedes Moduls ($2_{RK}$, $2_{LK}$, $2_{RH}$, $2_{LH}$) die gewünschte Trajektorie des betätigten Gelenks des Moduls ($2_{RK}$, $2_{LK}$, $2_{RH}$, $2_{LH}$) basierend auf dem kinematischen Zustand benachbarter biologischer Gelenke und auf dem kinematischen Zustand des gegenüberliegenden biologischen Gelenks autonom berechnet und steuert, wobei das Exoskelett (1) in den folgenden Konfigurationen bedienbar ist:

   - vollständiges Exoskelett (1), umfassend das rechte Kniemodul ($2_{RK}$), das linke Kniemodul ($2_{LK}$), das rechte Hüftmodul ($2_{RH}$) und das linke Hüftmodul ($2_{LH}$);

- partielles Exoskelett (1), bestehend aus dem rechten Kniemodul ($2_{RK}$), dem linken Kniemodul ($2_{LK}$), dem rechten Hüftmodul ($2_{RH}$) oder dem linken Hüftmodul ($2_{LH}$) allein;
- partielles Exoskelett (1), bestehend aus dem rechten Hüftmodul ($2_{RH}$) und dem rechten Kniemodul ($2_{RK}$) und damit ohne das linke Hüftmodul ($2_{LH}$) und das linke Kniemodul ($2_{LK}$);
- partielles Exoskelett (1), bestehend aus dem linken Hüftmodul ($2_{LH}$) und dem linken Kniemodul ($2_{LK}$) und damit ohne das rechte Hüftmodul ($2_{RH}$) und das rechte Kniemodul ($2_{RK}$);
- partielles Exoskelett (1), bestehend aus dem rechten Hüftmodul ($2_{RH}$) und dem linken Hüftmodul ($2_{LH}$) und damit ohne das rechte Kniemodul ($2_{RK}$) und das linke Kniemodul ($2_{LK}$); und
- partielles Exoskelett (1), bestehend aus dem rechten Kniemodul ($2_{RK}$) und dem linken Kniemodul ($2_{LK}$) und damit ohne das rechte Hüftmodul ($2_{RH}$) und das linke Hüftmodul ($2_{LH}$).

5. Exoskelett (1) gemäß einem der vorhergehenden Ansprüche, wobei die elektrischen Multimaster-Verbindungsmittel (3) zwischen den Steuerungen ($23_{RK}$, $23_{LK}$, $23_{RH}$, $23_{LH}$) der Module ($2_{RK}$, $2_{LK}$, $2_{RH}$, $2_{LH}$) verdrahtete elektrische Multimaster-Verbindungsmittel umfassen.

6. Exoskelett (1) gemäß Anspruch 5, wobei die verdrahteten elektrischen Multimaster-Verbindungsmittel (3) zwischen den Steuerungen ($23_{RK}$, $23_{LK}$, $23_{RH}$, $23_{LH}$) der Module ($2_{RK}$, $2_{LK}$, $2_{RH}$, $2_{LH}$) dazu konfiguriert sind, von der Steuerung ($23_{RK}$) des Moduls ($2_{RK}$), das am nächsten zum rechten Fuß des Patienten ist, nach oben entlang der rechten unteren Extremität zur Verbindung mit allen Steuerungen der rechten Extremität ($23_{RH}$), quer entlang der Lumbalregion des Patienten und dann nach unten entlang der unteren Extremität zur Verbindung mit allen Steuerungen der linken Extremität ($23_{LH}$) bis zur Steuerung ($23_{LK}$) des Moduls ($2_{LK}$), das dem linken Fuß des Patienten am nächsten ist, zu verlaufen.

7. Exoskelett (1) gemäß einem der vorhergehenden Ansprüche, wobei die elektrischen Multimaster-Verbindungsmittel (3) drahtlose elektrische Multimaster-Verbindungsmittel umfassen.

8. Exoskelett (1) gemäß einem der vorhergehenden Ansprüche, wobei jede fest zugeordnete Steuerung ($23_{RK}$, $23_{LK}$, $23_{RH}$, $23_{LH}$) ein fest zugeordnetes Speichermittel ($5_{RK}$, $5_{LK}$, $5_{RH}$, $5_{LH}$) zur Speicherung einer globalen Datenbank umfasst, die Informationen zur Bestimmung des kinematischen Zustands der biologischen Gelenke, an denen jedes Modul ($2_{RK}$, $2_{LK}$, $2_{RH}$, $2_{LH}$) gemäß Konfiguration zu befestigen ist, enthält.

9. Exoskelett (1) gemäß einem der vorhergehenden Ansprüche, wobei die lösbaren mechanischen Kopplungsmittel zwischen benachbarten Modulen ein Läuferrohr in einem Modul ($2_{RK}$, $2_{LK}$, $2_{RH}$, $2_{LH}$) umfassen, das zur Aufnahme in einem komplementären Läuferhohlraum in einem anderen Modul ($2_{RK}$, $2_{LK}$, $2_{RH}$, $2_{LH}$) geeignet ist, wobei die lösbaren mechanischen Kopplungsmittel hinsichtlich des Abstands zwischen den benachbarten Modulen ($2_{RK}$, $2_{LK}$, $2_{RH}$, $2_{LH}$) einstellbar sind.

10. Nichttherapeutisches Verfahren zum Bedienen eines Exoskeletts (1), das eine Vielzahl von autonom bedienbaren Modulen ($2_{RK}$, $2_{LK}$, $2_{RH}$, $2_{LH}$) umfasst, die jeweils dazu konfiguriert sind, ein entsprechendes biologisches Gelenk eines Patienten, der das Exoskelett (1) trägt, zu unterstützen,

wobei jedes Modul ($2_{RK}$, $2_{LK}$, $2_{RH}$, $2_{LH}$) eine mechanische Struktur umfasst, die ein betätigtes Gelenk umfasst, wobei die mechanische Struktur ferner Befestigungsmittel ($21_{RK}$, $21_{LK}$, $21_{RH}$, $21_{LH}$) zur Befestigung des Moduls ($2_{RK}$, $2_{LK}$, $2_{RH}$, $2_{LH}$) an Teilen einer Extremität, die sich auf beiden Seiten des entsprechenden biologischen Gelenks befinden, umfasst, wobei die mechanische Struktur ferner lösbare mechanische Kopplungsmittel zum lösbaren Koppeln jedes Moduls ($2_{RK}$, $2_{LK}$, $2_{RH}$, $2_{LH}$) an mindestens ein benachbartes Modul ($2_{RK}$, $2_{LK}$, $2_{RH}$, $2_{LH}$) umfasst,
wobei jedes Modul ($2_{RK}$, $2_{LK}$, $2_{RH}$, $2_{LH}$) ferner eine Vielzahl von Sensoren umfasst, die dazu konfiguriert sind, den kinematischen Zustand des entsprechenden biologischen Gelenks zu bestimmen, an dem das Modul ($2_{RK}$, $2_{LK}$, $2_{RH}$, $2_{LH}$) gemäß Konfiguration zu befestigen ist,
wobei jedes Modul ($2_{RK}$, $2_{LK}$, $2_{RH}$, $2_{LH}$) ferner eine fest zugeordnete Steuerung ($23_{RK}$, $23_{LK}$, $23_{rh}$, $23_{LH}$) umfasst, die mit dem betätigten Gelenk des Moduls ($2_{RK}$, $2_{LK}$, $2_{RH}$, $2_{LH}$) verbunden ist,
und wobei das Exoskelett (1) ferner elektrische Multimaster-Kommunikationsmittel (3) zwischen den fest zugeordneten Steuerungen ($23_{RK}$, $23_{LK}$, $23_{RH}$, $23_{LH}$) der Module ($2_{RK}$, $2_{LK}$, $2_{RH}$, $2_{LH}$) zur Übermittlung des kinematischen Zustands der biologischen Gelenke, an denen jedes Modul ($2_{RK}$, $2_{LK}$, $2_{RH}$, $2_{LH}$) befestigt ist, umfasst,
wobei das Exoskelett (1) nach einer dezentralisierten Multimaster-Steuerungsstrategie arbeitet, bei der der Patient nicht alle Module ($2_{RK}$, $2_{LK}$, $2_{RH}$, $2_{LH}$) tragen muss, wobei jede fest zugeordnete Steuerung ($23_{RK}$, $23_{LK}$, $23_{RH}$, $23_{LH}$) die folgenden Schritte ausführt:

- Erfassen von Informationen zur Bestimmung des kinematischen Zustands des entsprechenden biologischen Gelenks, an dem das Modul ($2_{RK}$, $2_{LK}$, $2_{RH}$, $2_{LH}$) gemäß Konfiguration zu befestigen ist, von den Sensoren des Moduls ($2_{RK}$, $2_{LK}$, $2_{RH}$, $2_{LH}$), umfassend die fest zugeordnete Steuerung ($23_{RK}$, $23_{LK}$, $23_{RH}$, $23_{LH}$);
- Übermitteln der Informationen an die Steuerungen ($23_{RK}$, $23_{LK}$, $23_{RH}$, $23_{LH}$) der verbleibenden Module über die elektrischen Multimaster-Kommunikationsmittel (3);
- Bestimmen, welche anderen Module des Exoskeletts (1) der Patient trägt, basierend auf den über die elektrischen Multimaster-Kommunikationsmittel (3) verfügbaren Informationen; und
- autonomes Berechnen und Steuern einer gewünschten Trajektorie des betätigten Gelenks des Moduls ($2_{RK}$, $2_{LK}$, $2_{RH}$, $2_{LH}$) zur Unterstützung der Bewegung des entsprechenden biologischen Gelenks in Abstimmung mit dem kinematischen Zustand anderer biologischer Gelenke.

11. Nichttherapeutisches Verfahren gemäß Anspruch 10, wobei die Module ($2_{RK}$, $2_{LK}$, $2_{RH}$, $2_{LH}$) zur Unterstützung eines entsprechenden biologischen Gelenks einer unteren Extremität des Patienten, der das Exoskelett (1) trägt, konfiguriert sind.

12. Nichttherapeutisches Verfahren gemäß einem der Ansprüche 10-11, das ferner die folgenden Schritte umfasst:

- Speichern der Informationen, die den kinematischen Zustand des entsprechenden biologischen Gelenks bestimmen, an dem jedes Modul ($2_{RK}$, $2_{LK}$, $2_{RH}$, $2_{LH}$) gemäß Konfiguration zu befestigen ist, in einer entsprechenden globalen Datenbank, die in den fest zugeordneten Speichermitteln ($5_{RK}$, $5_{LK}$, $5_{RH}$, $5_{LH}$) jeder Steuerung ($23_{RK}$, $23_{LK}$, $23_{RH}$, $23_{LH}$) enthalten ist; und
- Aktualisieren der globalen Datenbank mittels periodischen Zugriffs auf die elektrischen Kommunikationsmittel (3) durch jede Steuerung ($23_{RK}$, $23_{LK}$, $23_{RH}$, $23_{LH}$).

13. Nichttherapeutisches Verfahren gemäß einem der Ansprüche 10-12, wobei der Schritt des Berechnens der gewünschten Trajektorie des betätigten Gelenks eines Moduls ($2_{RK}$, $2_{LK}$, $2_{RH}$, $2_{LH}$) unter Verwendung eines neuronalen Netzwerks von Central-Pattern-Generator-Algorithmen, die adaptive Hopf-Oszillatoren umfassen, durchgeführt wird.

14. Nichttherapeutisches Verfahren gemäß Anspruch 13, wobei jeder Central-Pattern-Generator-Algorithmus zuvor mittels einer dynamischen Hebbschen Lernmethode, die auf adaptive Hopf-Oszillatoren angewendet wird, mit einer gewünschten Trajektorie des entsprechenden biologischen Gelenks trainiert wird.

15. Nichttherapeutische Methode gemäß einem der Ansprüche 13-14, wobei das neuronale Netzwerk der Central-Pattern-Generator-Algorithmen Koordinationsterme ($k_j$) zur Gewährleistung der Koordination zwischen betätigten Gelenken einer Extremität und der Koordination zwischen betätigten Gelenken gegenüberliegender Extremitäten umfasst.

**Revendications**

1. Exosquelette (1) comprenant une pluralité de modules ($2_{RK}$, $2_{LK}$, $2_{RH}$, $2_{LH}$) fonctionnant de manière autonome, chacun configuré pour assister une articulation biologique correspondante d'un patient portant l'exosquelette (1),

dans lequel chaque module ($2_{RK}$, $2_{LK}$, $2_{RH}$, $2_{LH}$) comprend une structure mécanique comprenant une articulation actionnée, la structure mécanique comprenant en outre des moyens de fixation ($21_{RK}$, $21_{LK}$, $21_{RH}$, $21_{LH}$) pour la fixation du module ($2_{RK}$, $2_{LK}$, $2_{RH}$, $2_{LH}$) à des parties d'un membre situées de part et d'autre de ladite articulation biologique correspondante, la structure mécanique comprenant en outre des moyens d'accouplement mécanique libérables pour accoupler de manière libérable chaque module ($2_{RK}$, $2_{LK}$, $2_{RH}$, $2_{LH}$) à au moins un module ($2_{RK}$, $2_{LK}$, $2_{RH}$, $2_{LH}$) adjacent, et
dans lequel chaque module ($2_{RK}$, $2_{LK}$, $2_{RH}$, $2_{LH}$) comprend en outre une pluralité de capteurs (22) configurés pour déterminer l'état cinématique de l'articulation biologique correspondante à laquelle ledit module ($2_{RK}$, $2_{LK}$, $2_{RH}$, $2_{LH}$) est configuré pour y être fixé,
dans lequel chaque module ($2_{RK}$, $2_{LK}$, $2_{RH}$, $2_{LH}$) comprend en outre une unité de commande dédiée ($23_{RK}$, $23_{LK}$, $23_{RH}$, $23_{LH}$) reliée à l'articulation actionnée dudit module ($2_{RK}$, $2_{LK}$, $2_{RH}$, $2_{LH}$),
l'exosquelette (1) comprend en outre des moyens de communication électrique multi-maîtres (3) entre les unités de commande dédiées ($23_{RK}$, $23_{LK}$, $23_{RH}$, $23_{LH}$) des modules ($2_{RK}$, $2_{LK}$, $2_{RH}$, $2_{LH}$) pour partager l'état cinématique des articulations biologiques auxquelles chaque module ($2_{RK}$, $2_{LK}$, $2_{RH}$, $2_{LH}$) est fixé, et

où l'unité de commande dédiée ($23_{RK}$, $23_{LK}$, $23_{RH}$, $23_{LH}$) de chaque module ($2_{RK}$, $2_{LK}$, $2_{RH}$, $2_{LH}$) est configurée pour :

- collecter des informations déterminant l'état cinématique de l'articulation biologique correspondante à laquelle ledit module ($2_{RK}$, $2_{LK}$, $2_{RH}$, $2_{LH}$) est configuré pour y être fixé à partir des capteurs appartenant audit module ($2_{RK}$, $2_{LK}$, $2_{RH}$, $2_{LH}$),
- partager lesdites informations avec les modules restants par le biais des moyens de communication électrique multi-maîtres (3),
- déterminer quels autres modules ($2_{RK}$, $2_{LK}$, $2_{RH}$, $2_{LH}$) de l'exosquelette (1) le patient porte en fonction des informations disponibles par le biais des moyens de communication électrique multi-maîtres (3), et
- calculer et commander de manière autonome, en fonction des informations concernant l'état cinématique des articulations biologiques du patient partagées par le biais des moyens de communication électrique multi-maîtres (3), une trajectoire souhaitée de l'articulation actionnée dudit module ($2_{RK}$, $2_{LK}$, $2_{RH}$, $2_{LH}$) pour assister le mouvement de l'articulation biologique correspondante en coordination avec l'état cinématique d'autres articulations biologiques, de telle sorte que l'exosquelette (1) fonctionne selon une stratégie de commande décentralisée multi-maître qui ne nécessite pas que le patient porte tous les modules ($2_{RK}$, $2_{LK}$, $2_{RH}$, $2_{LH}$), où l'étape de calcul de la trajectoire souhaitée de l'articulation actionnée d'un module ($2_{RK}$, $2_{LK}$, $2_{RH}$, $2_{LH}$) est réalisée à l'aide d'un réseau neuronal d'algorithmes de générateurs de motifs centraux comprenant des oscillateurs de Hopf adaptatifs, et où chaque algorithme de générateurs de motifs centraux est préalablement entraîné avec une trajectoire souhaitée de l'articulation biologique correspondante au moyen d'un procédé d'apprentissage dynamique de Hebb appliqué aux oscillateurs de Hopf adaptatifs.

2. Exosquelette (1) selon la revendication 1, où les modules ($2_{RK}$, $2_{LK}$, $2_{RH}$, $2_{LH}$) sont configurés pour assister une articulation biologique correspondante d'un membre inférieur du patient portant l'exosquelette (1).

3. Exosquelette (1) selon la revendication 2, comprenant un module de genou droit ($2_{RK}$), un module de genou gauche ($2_{LK}$), un module de hanche droite ($2_{RH}$), et un module de hanche gauche ($2_{LH}$), et comprenant en outre un support lombaire (4) configuré pour être accouplé au module de hanche droite ($2_{RH}$) et/ou au module de hanche gauche ($2_{LH}$).

4. Exosquelette (1) selon la revendication 3, dans lequel l'unité de commande ($23_{RK}$, $23_{LK}$, $23_{RH}$, $23_{LH}$) de chaque module ($2_{RK}$, $2_{LK}$, $2_{RH}$, $2_{LH}$) calcule et commande de manière autonome la trajectoire souhaitée de l'articulation actionnée dudit module ($2_{RK}$, $2_{LK}$, $2_{RH}$, $2_{LH}$) en fonction de l'état cinématique des articulations biologiques adjacentes et de l'état cinématique de l'articulation biologique opposée, où l'exosquelette (1) peut fonctionner dans les configurations suivantes :

- exosquelette complet (1) comprenant le module de genou droit ($2_{RK}$), le module de genou gauche ($2_{LK}$), le module de hanche droite ($2_{RH}$) et le module de hanche gauche ($2_{LH}$) ;
- exosquelette partiel (1) constitué du module du genou droit ($2_{RK}$), du module de genou gauche ($2_{LK}$), du module de hanche droite ($2_{RH}$) ou du module de hanche gauche ($2_{LH}$) seul ;
- exosquelette partiel (1) constitué du module de hanche droite ($2_{RH}$) et du module genou droit ($2_{RK}$), et donc dépourvu du module de hanche gauche ($2_{LH}$) et du module genou gauche ($2_{LK}$) ;
- exosquelette partiel (1) constitué du module de hanche gauche ($2_{LH}$) et du module genou gauche ($2_{LK}$), et donc dépourvu du module de hanche droite ($2_{RH}$) et le module genou droit ($2_{RK}$) ;
- exosquelette partiel (1) constitué du module de hanche droite ($2_{RH}$) et du module de hanche gauche ($2_{LH}$), et donc dépourvu du module de genou droit ($2_{RK}$) et du module genou gauche ($2_{LK}$) ; et
- exosquelette partiel (1) constitué du module du genou droit ($2_{RK}$) et du module genou gauche ($2_{LK}$), et donc dépourvu du module de hanche droite ($2_{RH}$) et du module de hanche gauche ($2_{LH}$).

5. Exosquelette (1) selon l'une quelconque des revendications précédentes, dans lequel les moyens de connexion électrique multi-maîtres (3) entre les unités de commande ($23_{RK}$, $23_{LK}$, $23_{RH}$, $23_{LH}$) des modules ($2_{RK}$, $2_{LK}$, $2_{RH}$, $2_{LH}$) comprennent un moyen de connexion électrique multi-maître filaire.

6. Exosquelette (1) selon la revendication 5, dans lequel le moyen de connexion électrique multi-maître filaire (3) entre les unités de commande ($23_{RK}$, $23_{LK}$, $23_{RH}$, $23_{LH}$) des modules ($2_{RK}$, $2_{LK}$, $2_{RH}$, $2_{LH}$) est configuré pour s'exécuter à partir de l'unité de commande ($23_{RK}$) du module ($2_{RK}$) le plus proche du pied droit du patient, vers le haut le long dudit membre inférieur droit pour une connexion avec toutes les unités de commande de membre droit ($23_{RH}$), transversalement le long de la région lombaire du patient, puis vers le bas le long du membre inférieur pour une connexion avec toutes les unités de commande du membre gauche ($23_{LH}$) jusqu'à l'unité de commande ($23_{LK}$) du module ($2_{LK}$) le plus proche du pied gauche du patient.

**7.** Exosquelette (1) selon l'une quelconque des revendications précédentes, dans lequel les moyens de connexion électrique multi-maîtres (3) comprennent un moyen de connexion électrique multi-maître sans fil.

**8.** Exosquelette (1) selon l'une quelconque des revendications précédentes, dans lequel chaque unité de commande dédiée ($23_{RK}$, $23_{LK}$, $23_{RH}$, $23_{LH}$) comprend un moyen de mémoire dédié ($5_{RK}$, $5_{LK}$, $5_{RH}$, $5_{LH}$) pour stocker une base de données globale contenant des informations déterminant l'état cinématique des articulations biologiques auxquelles chaque module ($2_{RK}$, $2_{LK}$, $2_{RH}$, $2_{LH}$) est configuré pour y être fixé.

**9.** Exosquelette (1) selon l'une quelconque des revendications précédentes, dans lequel les moyens d'accouplement mécanique libérables entre modules adjacents comprennent un tube coulissant dans un module ($2_{RK}$, $2_{LK}$, $2_{RH}$, $2_{LH}$) approprié pour être reçu par une cavité coulissante de manière complémentaire dans un autre module ($2_{RK}$, $2_{LK}$, $2_{RH}$, $2_{LH}$), où lesdits moyens d'accouplement mécanique libérables sont réglables quant à la distance entre lesdits modules ($2_{RK}$, $2_{LK}$, $2_{RH}$, $2_{LH}$) adjacents.

**10.** Procédé non thérapeutique pour faire fonctionner un exosquelette (1) comprenant une pluralité de modules ($2_{RK}$, $2_{LK}$, $2_{RH}$, $2_{LH}$) fonctionnant de manière autonome, chacun configuré pour assister une articulation biologique correspondante d'un patient portant l'exosquelette (1),

où chaque module ($2_{RK}$, $2_{LK}$, $2_{RH}$, $2_{LH}$) comprend une structure mécanique comprenant une articulation actionnée, la structure mécanique comprenant en outre des moyens de fixation ($21_{RK}$, $21_{LK}$, $21_{RH}$, $21_{LH}$) pour la fixation du module ($2_{RK}$, $2_{LK}$, $2_{RH}$, $2_{LH}$) à des parties d'un membre situées de part et d'autre de ladite articulation biologique correspondante, la structure mécanique comprenant en outre des moyens d'accouplement mécanique libérables pour accoupler de manière libérable chaque module ($2_{RK}$, $2_{LK}$, $2_{RH}$, $2_{LH}$) à au moins un module ($2_{RK}$, $2_{LK}$, $2_{RH}$, $2_{LH}$) adjacent,
où chaque module ($2_{RK}$, $2_{LK}$, $2_{RH}$, $2_{LH}$) comprend en outre une pluralité de capteurs configurés pour déterminer l'état cinématique de l'articulation biologique correspondante à laquelle ledit module ($2_{RK}$, $2_{LK}$, $2_{RH}$, $2_{LH}$) est configuré pour y être fixé,
où chaque module ($2_{RK}$, $2_{LK}$, $2_{RH}$, $2_{LH}$) comprend en outre une unité de commande dédiée ($23_{RK}$, $23_{LK}$, $23_{RH}$, $23_{LH}$) reliée à l'articulation actionnée dudit module ($2_{RK}$, $2_{LK}$, $2_{RH}$, $2_{LH}$),
et où l'exosquelette (1) comprend en outre des moyens de communication électrique multi-maîtres (3) entre les unités de commande dédiées ($23_{RK}$, $23_{LK}$, $23_{RH}$, $23_{LH}$) des modules ($2_{RK}$, $2_{LK}$, $2_{RH}$, $2_{LH}$) pour partager l'état cinématique des articulations biologiques auxquelles chaque module ($2_{RK}$, $2_{LK}$, $2_{RH}$, $2_{LH}$) est fixé,
dans lequel l'exosquelette (1) fonctionne selon une stratégie de commande décentralisée multi-maître qui ne nécessite pas que le patient porte tous les modules ($2_{RK}$, $2_{LK}$, $2_{RH}$, $2_{LH}$), où chaque unité de commande dédiée ($23_{RK}$, $23_{LK}$, $23_{RH}$, $23_{LH}$) réalise les étapes suivantes :

- collecter des informations déterminant l'état cinématique de l'articulation biologique correspondante à laquelle ledit module ($2_{RK}$, $2_{LK}$, $2_{RH}$, $2_{LH}$) est configuré pour être y fixé à partir des capteurs du module ($2_{RK}$, $2_{LK}$, $2_{RH}$, $2_{LH}$) comprenant ladite unité de commande dédiée ($23_{RK}$, $23_{LK}$, $23_{RH}$, $23_{LH}$) ;
- partager lesdites informations avec les unités de commande ($23_{RK}$, $23_{LK}$, $23_{RH}$, $23_{LH}$) des modules restants par le biais des moyens de communication électrique multi-maîtres (3) ;
- déterminer quels autres modules de l'exosquelette (1) le patient porte en fonction des informations disponibles par le biais des moyens de communication électrique multi-maîtres (3) ; et
- calculer et commander de manière autonome une trajectoire souhaitée de l'articulation actionnée dudit module ($2_{RK}$, $2_{LK}$, $2_{RH}$, $2_{LH}$) pour assister le mouvement de l'articulation biologique correspondante en coordination avec l'état cinématique d'autres articulations biologiques.

**11.** Procédé non thérapeutique selon la revendication 10, où les modules ($2_{RK}$, $2_{LK}$, $2_{RH}$, $2_{LH}$) sont configurés pour assister une articulation biologique correspondante d'un membre inférieur du patient portant l'exosquelette (1).

**12.** Procédé non thérapeutique selon l'une quelconque des revendications 10 à 11, comprenant en outre les étapes consistant à :

- stocker les informations déterminant l'état cinématique de l'articulation biologique correspondante à laquelle chaque module ($2_{RK}$, $2_{LK}$, $2_{RH}$, $2_{LH}$) est configuré pour y être fixé dans une base de données globale respective comprise dans les moyens de mémoire dédiés ($5_{RK}$, $5_{LK}$, $5_{RH}$, $5_{LH}$) de chaque unité de commande ($23_{RK}$, $23_{LK}$,

$23_{RH}$, $23_{LH}$) ; et
- chaque unité de commande ($23_{RK}$, $23_{LK}$, $23_{RH}$, $23_{LH}$) mettant à jour ladite base de données globale en accédant périodiquement aux moyens de communication électrique (3).

**13.** Procédé non thérapeutique selon l'une quelconque des revendications 10 à 12, où l'étape de calcul de la trajectoire souhaitée de l'articulation actionnée d'un module ($2_{RK}$, $2_{LK}$, $2_{RH}$, $2_{LH}$) est réalisée à l'aide d'un réseau neuronal d'algorithmes de générateurs de motifs centraux comprenant des oscillateurs de Hopf adaptatifs.

**14.** Procédé non thérapeutique selon la revendication 13, où chaque algorithme de générateurs de motifs centraux est préalablement entraîné avec une trajectoire souhaitée de l'articulation biologique correspondante au moyen d'un procédé d'apprentissage dynamique de Hebb appliqué aux oscillateurs de Hopf adaptatifs.

**15.** Procédé non thérapeutique selon l'une quelconque des revendications 13 à 14, où le réseau neuronal des algorithmes de générateurs de motifs centraux comprend des termes de coordination ($k_j$) pour assurer la coordination entre les articulations actionnées d'un membre et la coordination entre les articulations actionnées de membres opposés.

FIG. 1

FIG. 2a

FIG. 2b

FIG. 2c

FIG. 2d

FIG. 2e

**FIG. 3**
**PRIOR ART**

**FIG. 4**

$23_{LH}$

$5_{LH}$ Memory

Global Data Base

Left Hip Control Processor

Right Hip Control Processor

$5_{RH}$ Memory

Global Data Base

$23_{RH}$

3 Multi-master network

$23_{LK}$

$5_{LK}$ Memory

Global Data Base

Left Knee Control Processor

Right Knee Control Processor

$5_{RK}$ Memory

Global Data Base

$23_{RK}$

**FIG. 5**

| | |
|---|---|
| Left Hip Angle | Right Hip Angle |
| Left Hip Force | Right Hip Force |
| Left shoulder orientation | Right shoulder orientation |
| Left Knee Angle | Right Knee Angle |
| Left Knee Force | Right Knee Force |
| Left thigh orientation | Right thigh orientation |
| Left GRF | Right GRF |

**FIG. 6**

FIG. 7a

FIG. 7b

**FIG. 8a**

**FIG. 8b**

**FIG. 9a**

**FIG. 9b**

**FIG. 10a**

**FIG. 10b**

**FIG. 11a**

**FIG. 11b**

FIG. 12a

FIG. 12b

**FIG. 13**

**FIG. 14**

**FIG. 15**

**FIG. 16**

FIG. 17

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3225363 B1
- EP 2178680 B1
- US 20130261766 A
- US 20100094188 A
- US 2014142475 A

### Non-patent literature cited in the description

- **JIAXING FANG et al.** A robotic exoskeleton for lower limb rehabilitation controlled by a central pattern generator. *2014 IEEE International Conference on Robotics and Biomimetics (ROBIO 2014),* 05 December 2014

- **SAMUEL M. CAMPBELL et al.** Autonomous assistance-as-needed control of a lower limb exoskeleton with guaranteed stability. *IEEE Access,* 12 February 2020, vol. 8, 51168-51178